(19) Europäisches Patentamt
European Patent Office
Office européen des brevets

(11) **EP 2 723 910 B1**

(12) **EUROPÄISCHE PATENTSCHRIFT**

(45) Veröffentlichungstag und Bekanntmachung des Hinweises auf die Patenterteilung:
**13.05.2015 Patentblatt 2015/20**

(21) Anmeldenummer: **12735439.7**

(22) Anmeldetag: **06.06.2012**

(51) Int Cl.:
*C22C 38/02* *(2006.01)*     *C22C 38/04* *(2006.01)*
*C22C 38/06* *(2006.01)*     *C22C 38/42* *(2006.01)*
*C22C 38/52* *(2006.01)*     *C22C 38/44* *(2006.01)*
*C22C 38/50* *(2006.01)*     *C22C 38/48* *(2006.01)*
*C22C 38/00* *(2006.01)*     *C22C 38/22* *(2006.01)*
*C22C 38/26* *(2006.01)*     *H01M 8/02* *(2006.01)*

(86) Internationale Anmeldenummer:
**PCT/DE2012/000609**

(87) Internationale Veröffentlichungsnummer:
**WO 2012/175067 (27.12.2012 Gazette 2012/52)**

(54) **HITZEBESTÄNDIGE EISEN-CHROM-ALUMINIUM-LEGIERUNG MIT GERINGER CHROMVERDAMPFUNGSRATE UND ERHÖHTER WARMFESTIGKEIT**

HEAT-RESISTANT IRON-CHROMIUM-ALUMINIUM ALLOY WITH LOW CHROMIUM VAPORIZATION RATE AND ELEVATED THERMAL STABILITY

ALLIAGE FER-CHROME-ALUMINIUM RÉSISTANT AUX TEMPÉRATURES ÉLEVÉES AYANT UN FAIBLE TAUX D'ÉVAPORATION DE CHROME ET UNE RÉSISTANCE À LA CHALEUR ACCRUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2011 DE 102011111703**
              **06.03.2012 DE 102012004488**

(43) Veröffentlichungstag der Anmeldung:
**30.04.2014 Patentblatt 2014/18**

(73) Patentinhaber:
• **VDM Metals GmbH**
  **58791 Werdohl (DE)**
• **Forschungszentrum Jülich GmbH**
  **52425 Jülich (DE)**

(72) Erfinder:
• **HATTENDORF, Heike**
  **58791 Werdohl (DE)**

• **KUHN, Bernd**
  **52477 Alsdorf (DE)**
• **ECKARDT, Thomas**
  **50823 Köln (DE)**
• **BECK, Tilmann**
  **52428 Jülich (DE)**
• **QUADAKKERS, Willem, Joe**
  **NL-6363 EG Wijnandsrade (NL)**
• **THEISEN, Werner**
  **45527 Hattingen (DE)**
• **NABIRAN, Nilofar**
  **44799 Bochum (DE)**

(56) Entgegenhaltungen:
DE-A1-102009 039 552     DE-U1-202011 106 778
JP-A- 2001 164 341         US-A1- 2005 211 348
US-A1- 2007 144 634

**Beschreibung**

Die Erfindung betrifft eine schmelzmetallurgisch hergestellte Eisen-Chrom-Aluminium-Legierung mit hervorragender Korrosionsbeständigkeit, geringer Chromverdampfungsrate und hoher Warmfestigkeit.

Der DE 100 25 108 A1 ist ein Hochtemperaturwerkstoff zu entnehmen, umfassend eine Chromoxid bildende Eisenlegierung mit bis zu 2 Masse-% wenigstens eines sauerstoffaffinen Elements aus der Gruppe Y, Ce, Zr, Hf und Al, bis zu 2 Masse-% eines Elements M aus der Gruppe Mn, Ni und Co, welches mit Chromoxid bei hohen Temperaturen eine Spinellphase vom Typ $MCr_2O_4$ bildet, bis zu 2 Masse-% eines weiteren Elements aus der Gruppe Ti, Hf, Sr, Ca und Zr, welches die elektrische Leitfähigkeit von Oxiden auf Cr-Basis erhöht. Der Chromgehalt soll in einem Konzentrationsbereich zwischen 12 und 28 % vorliegen. Einsatzgebiete für diesen Hochtemperaturwerkstoff sind bipolare Platten in einer Festoxid-Brennstoffzelle (Hochtemperatur-Brennstoffzelle oder auch SOFC).

Die EP 1 298 228 A1 betrifft einen Stahl für eine Festoxid-Brennstoffzelle, der folgende Zusammensetzung aufweist: nicht mehr als 0,2 % C, nicht mehr als 1 % Si, nicht mehr als 1 % Mn, nicht mehr als 2 % Ni, 15 - 30 % Cr, nicht mehr als 1 % Al, nicht mehr als 0,5 % Y, nicht mehr als 0,2 % SE und nicht mehr als 1 % Zr, Rest Eisen und herstellungsbedingte Verunreinigungen.

Diesen beiden Legierungen gemein ist eine geringe Warmfestigkeit und eine ungenügende Kriechbeständigkeit bei Temperaturen oberhalb von 700°C. Gerade im Bereich zwischen 700°C und ca. 900°C haben diese Legierungen aber eine herausragende Oxidations- und Korrosionsbeständigkeit und aufgrund der Chrom-Mangan-Spinell-Bildung durch den Mangan-Gehalt eine verringerte Chromverdampfung.

Durch die DE 10 2006 007 598 A1 ist ein kriechfester ferritischer Stahl bekannt geworden, umfassend Ausscheidungen einer intermetallischen Phase vom Typ $Fe_2(M, Si)$ oder $Fe_7(M, Si)_6$ mit wenigstens einem metallischen Legierungselement M, das durch die Elemente Niob, Molybdän, Wolfram oder Tantal gebildet sein kann. Der Stahl soll bevorzugt für eine bipolare Platte in einem Festoxid-Brennstoffzellenstapel eingesetzt werden.

Durch die EP 1 536 031 A1 ist ein metallisches Material für Festoxid-Brennstoffzellen bekannt geworden, beinhaltend ≤ 0,2 % C, 0,02 bis 1 % Si, ≤ 2 % Mn, 10 bis 40 % Cr, 0,03 bis 5 % Mo, 0,1 bis 3 % Nb, mindestens eines der Elemente aus der Gruppe Sc, Y, La, Ce, Pr, Nd, Pm, Sn, Zr und Hf ≤ 1 %, Rest Eisen und unvermeidbare Verunreinigungen, wobei die Zusammensetzung folgender Gleichung genügen soll: 0,1 ≤ Mo / Nb ≤ 30.

Die EP 1 882 756 A1 beschreibt einen ferritischen Chromstahl, insbesondere einsetzbar in Festoxid-Brennstoffzellen. Der Chromstahl hat folgende Zusammensetzung: C max. 0,1 %, Si 0,1 - 1 %, Mn max. 0,6 %, Cr 15 - 25 %, Ni max. 2 %, Mo 0,5 - 2 %, Nb 0,2 - 1,5 %, Ti max. 0,5%, Zr max. 0,5 %, SE max. 0,3 %, Al max. 0,1 %, N max. 0,07 %, Rest Fe und erschmelzungsbedingte Verunreinigungen, wobei der Gehalt an Zr + Ti mindestens 0,2 % beträgt.

Die vorbekannten Legierungen haben im Vergleich zur DE 100 25 108 A1 und zur EP 1 298 228 A2 eine verbesserte Warmfestigkeit und eine erhöhte Kriechbeständigkeit bei Temperaturen oberhalb von 700°C, und zwar durch Bildung von Ausscheidungen, die die Versetzungsbewegungen und damit die plastische Verformung des Materials behindern. Diese Ausscheidungen bestehen z. B. im Fall der DE 10 2006 007 598 A1 aus einer Laves Phase, einer intermetallischen Verbindung mit der Zusammensetzung $Fe_2(M,Si)$ oder $Fe_7(M,Si)_6$, wobei M Niob, Molybdän, Wolfram oder Tantal sein kann. Dabei sollte ein Volumenanteil von 1 bis 8 % vorzugsweise 2,5 bis 5 % erreicht werden. Es können aber auch andere Ausscheidungen wie Fe-haltige und/oder Cr-haltige und/oder Si-haltige Teilchen sein, wie z. B. in der EP 1 536 031 A1 beschrieben, oder Karbide mit Nb, W, Mo sein. Allen diesen Teilchen ist gemeinsam, dass sie die Verformung des Materials erschweren.

Aus dem oben beschriebenen Stand der Technik ist bekannt, dass geringfügige Zugaben von Y, Zr, Ti, Hf, Ce, La und ähnlichen reaktiven Elementen die Oxidationsbeständigkeit von Fe-Cr-Legierungen stark positiv beeinflussen können.

Die in der DE 10 2006 007 598 A1, der EP 1 536 031 A1 und der EP 1 882 756 A1 angeführten Legierungen sind für die Anwendung als Interkonnektorplatte für die Festoxid-Brennstoffzelle optimiert: Sie haben durch Verwendung einer ferritischen Legierung mit 10 bis 40 % Chrom einen den keramischen Bauteilen Anode und Elektrolyt soweit wie möglich angepassten Ausdehnungskoeffizienten.

Weitere Anforderungen an den Interkonnektorstahl einer Festoxid-Brennstoffzelle sind neben der oben schon erwähnten Kriechfestigkeit eine sehr gute Korrosionsbeständigkeit, eine gute Leitfähigkeit der Oxidschicht und eine geringe Chromverdampfung.

Die Anforderungen an den Reformer und den Wärmetauscher für die Festoxid-Brennstoffzelle sind - ähnlich wie die Anforderungen an die Interkonnektorplatten-eine möglichst gute Kriechfestigkeit, eine sehr gute Korrosionsbeständigkeit und eine geringe Chromverdampfung. Das Oxid muss für diese Bauteile nicht leitfähig sein, da kein Stromdurchgang erforderlich ist.

In der DE 10 2006 007 598 A1 wird zum Beispiel die Korrosionsbeständigkeit durch Ausbildung einer Chromoxiddeckschicht erreicht. Dadurch, dass sich zusätzlich auf der Chromoxiddeckschicht ein Spinell mit Mn, Ni, Co oder Cu bildet, bilden sich weniger flüchtige Chromoxide bzw. Chromoxydhydroxide, die die Kathode vergiften. Dadurch, dass Si in der Laves Phase $Fe_2(M, Si)$ oder $Fe_7(M, Si)_6$ stabil gebunden wird, bildet sich auch keine nichtleitende Unterschicht aus Siliziumoxid unterhalb der Chromoxiddeckschicht. Die Korrosionsbeständigkeit wird weiter dadurch verbessert, dass der Al-Gehalt gering gehalten und so die Erhöhung der Korrosion durch die innere Oxidation des Aluminiums vermieden wird. Ein geringer Ti-Zusatz sorgt zusätzlich für eine Verfestigung der Oberfläche und verhindert so Aufwölbungen der Oxidschicht und den Einschluss von metallischen Bereichen in die Oxidschicht, was die Oxidation erhöhen würde. Zusätzlich erhöht die Zugabe von sauerstoffaffinen Elementen wie La, Ce, Y, Zr oder dergleichen, die Korrosionsbeständigkeit weiter.

Dem oben beschriebenen Stand der Technik ist gemeinsam, dass diese Stähle eine Oxidschicht, bestehend aus Chromoxid, unterhalb einer Chrom-Manganoxid Schicht bilden, die insgesamt leitfähig ist. Eine solche leitfähige Oxidschicht muss eingesetzt werden, wenn der Stahl als Interkonnektorplatte in einer Festoxid-Brennstoffzelle eingebaut werden muss. Bei Verwendung als Reformer oder Wärmetauscher für die Festoxid-Brennstoffzelle ist auch eine sehr geringe Chromverdampfung notwendig, weil die Gase, die durch diese Bauteile geleitet werden u.a. auch in die Festoxid-Brennstoffzelle geleitet werden und das von ihnen verdampfte Chrom dann die Festoxid-Brennstoffzelle vergiften kann. Allerdings muss die Oxidschicht nicht leitfähig sein, so dass hier z. B. auch Silizium- oder Aluminiumoxidschichten verwendet werden könnten (siehe dazu z. B. Quadakkers W.J., Piron-Abellan J., Shemet V., Singheiser L. Metallic Interconnects for Solid Oxide Fuel Cells - a Review, Materials at High Temperatures 20(2) (2003) 115-127).

Die Zugabe von Silizium zu Eisen-Chrom-Legierungen fördert die Bildung der versprödend wirkenden Sigma-Phase was für ein Konstruktionsteil nicht förderlich ist. Bei Legierungen, die Siliziumoxidschichten bilden, neigen diese zu Abplatzungen, was nicht vorteilhaft ist (siehe dazu F.H.Stott, G.J.Gabriel, F.I.Wei, G.C. Wood,The development of silicon-containig oxides during the oxidation of Iron-chomium-base alloy, Werkstoffe und Korrosion 38, (1987), Seiten 521 - 531).

Die Bildung einer Aluminiumoxidschicht kann durch Zugabe einer ausreichenden Menge an Aluminium in einer Eisen-Chrom Legierung erreicht werden.

Ferritische Eisen-Chrom-Aluminium-Legierungen, die beim Einsatz bei hohen Temperaturen eine Aluminiumoxidschicht bilden, sind z. B. durch die folgenden Druckschriften bekannt.

Die DE 103 10 865 B3 beschreibt die Verwendung einer Eisen-Chrom-Aluminium-Legierung mit guter Oxidationsbeständigkeit, mit (in Masse-%) 2,5 bis 5,0 % Aluminium, 10 bis 25 % Chrom und 0,05 - 0,8% Silizium sowie Zugaben von > 0,01 bis 0,1 % Yttrium und/oder > 0,01 bis 0,1 % Hafnium und/oder > 0,01 bis 0,2 % Zirkon und/oder > 0,01 bis 0,2 % Cer-Mischmetall (Ce, La, Nd) sowie herstellungsbedingten Verunreinigungen für Komponenten in Dieselfahrzeugen und Zweitaktgeräten, insbesondere in Diesel- und Zweitaktmotoren.

Die DE 101 57 749 A1 beschreibt eine Eisen-Chrom-Aluminium-Legierung mit hoher Lebensdauer, mit (in Masse-%) > 2 bis 3,6 % Aluminium und > 10 bis 20 % Chrom sowie Zugaben von 0,1 bis 1 % Si, max. 0,5 % Mn, 0,01 bis 0,2 % Yttrium und/oder 0,01 bis 0,2 % Hf und/oder 0,01 bis 0,3 % Zr, max. 0,01% Mg, max. 0,01 % Ca, max. 0,08 % Kohlenstoff, max. 0,04 % Stickstoff, max. 0,04 % Phosphor max. 0,01 % Schwefel, max. 0,05 % Kupfer und jeweils max. 0,1 % Molybdän und/oder Wolfram sowie den üblichen herstellungsbedingten Verunreinigungen, Rest Eisen. Diese Legierung ist für die Verwendung als Heizleiter in Heizelementen in Haushaltsgeräten und im Ofenbau vorgesehen, ferner für den Einsatz als Trägerfolie in Katalysatoren sowie als Brems- und Anfahrwiderstand.

Die JP 6116686 A beschreibt eine Fe-Cr-Al-Legierung mit ausgezeichneter Oxidationsbeständigkeit, die (in Masse-%) max. 0,05 % Kohlenstoff, max. 0,02 % Stickstoff, max. 1,0 % Silizium, max. 1,5 % Mangan, max. 0,01 % Schwefel, insgesamt maximal 0,05 % Titan und Niob, maximal 0,01 % Cer, 10 bis 28 % Chrom, 1 bis 6 % Aluminium, 0,0003 bis 0,010 % Ca, und weiterhin 0,01 bis 0,20 % Lanthan, 0,01 bis 1 % Zirkon enthält, wobei die Formel 0,1 < Zr/La < 20 eingehalten wird, mit dem Rest Eisen und den unvermeidbaren Verunreinigungen. Die Legierung wird als Folie eingesetzt.

Die JP 62278248 A beschreibt eine Eisen-Chrom-Aluminium-Legierung die eine gute Warmverformbarkeit mit ausgezeichneter Haftfähigkeit der Oxidschicht vereinigt. Sie besteht (in Masse-%) aus 10 - 26 % Chrom, 1 bis 6 % Aluminium, 0,006 bis 0,08 % Y, 0,0005 bis 0,03 % Magnesium, Eisen als Rest und den unvermeidbaren Verunreinigungen. Wenn notwendig kann insgesamt ≤ 0,80 % eines oder mehrerer der Elemente aus 0,03 bis 0,40 % Ti, 0,10 bis 0,80 % Zirkon und 0,10 bis 0,80 %Nb, falls notwendig, insgesamt 0,006 bis 0,08 % der Elemente Hf und/oder Seltenen Erden (außer Y). enthalten sein. Durch Zugabe von Yttrium und Magnesium wird die Warmverformbarkeit und die Haftfähigkeit der Oxidschicht verbessert. Diese Legierung wird als Heizleiterdraht eingesetzt.

Die US 5,228,932 A beschreibt eine Fe-Cr-Al-Legierung mit guter Oxidationsbeständigkeit und hohem Widerstand gegen Hochtemperatursprödigkeit. Sie enthält (in Masse-%) 10 bis 28 % Chrom, 1 bis 10 % Aluminium, 0,0003 bis 0,010 % Bor, 0,01 bis 0,20 % Lanthan, 0,01 bis 1 % Zirkon, wobei die Formel 0,1 < Zr/La < 20 eingehalten wird. Weiterhin enthält sie ≤ 0,05 % Kohlenstoff, ≤ 0,02 % Stickstoff, ≤ 0,50 % Silizium, ≤ 1,0 % Mangan, ≤ 0,05 % Titan, Rest Eisen sowie den unvermeidbaren Verunreinigungen. Zugaben von Niob, Vanadium und Tantal in einer Menge von maximal 1 % sind optional. Der Stahl ist geeignet als Trägermaterial für Katalysatoren in Abgassystemen.

Den in den Druckschriften gemäß DE 103 10 865 B3, DE 101 57 749 A1, JP 6116686 A, JP 62278248 A und EP 0 516 097 A1 beschriebenen Eisen-Chrom-Aluminium-Legierungen ist gemeinsam, dass sie eine sehr geringe Warmfestigkeit haben.

Die EP 0 290 719 A1 beschreibt einen ferritischen hitzebeständigen Stahl, der aus (in Masse-%) max. 0,10 % Kohlenstoff, max. 0,80 % Silizium, 0,10 bis 0,50 % Mangan, max. 0,035 % Phosphor, max. 0,020 % Schwefel, 12 bis 30 % Chrom, 0,10 bis 1,0 % Molybdän, max. 1 % Nickel, 3,5 bis 8 % Aluminium, 0,01 bis 1 % Zr, 0,003 bis 0,8 % Seltene Erdmetalle, 0,003 bis 0,30 % Titan, 0,003 bis 0,050 % Stickstoff, Rest Fe und unvermeidbaren Verunreinigungen besteht. Der Stahl wird durch eine kombinierte Zugabe von sauerstoffaffinen Elementen in seinem Verhalten bei hohen Anwendungstemperaturen verbessert. Neben der Stabilisierung des elektrischen Widerstandes von aus diesem Stahl gebauten Heizelementen mittels Zusätzen von Zirkonium, Titan und Seltenen Erdmetallen wird auch unter Eigenbelastung die Kriechdehnung des Stahls bei Temperaturen oberhalb von 900°C wesentlich verringert und damit die thermische Belastbarkeit erhöht. Die entstehende Oxidschicht erhöht die Schutzfunktion zur Erhaltung des metallischen Querschnitts bei kontinuierlicher und/oder zyklischer Wärmebehandlung. Der Stahl soll vornehmlich für Heizdrähte und Heizelemente aller Art sowie für Konstruktionsteile für die Führung und Reinigung von Abgasen im Anschluss von Verbrennungsprozessen (Abgaskatalysatoren) eingesetzt werden.

Die EP 0 516 267 A1 beschreibt einen ferritischen hitzebeständigen Stahl, bestehend aus (in Masse-%) weniger als 0,03 % Kohlenstoff, weniger als 1 % Silizium, weniger als 1 % Mangan, weniger als 0,04 % Phosphor, weniger als 0,03 % Schwefel, 15 bis 25 % Chrom, weniger als 0,03 % Stickstoff, 3 bis 6 % Aluminium, 0,1 bis 4 % Molybdän, 0,01 bis 0,15 % Yttrium und oder Seltene Erdmetalle, Rest Eisen. Optional können 0,05 bis 1 % eines oder mehrerer der Elemente Niob, Vanadium and Titan zugefügt werden. Dieser Stahl zeigt eine ausgezeichnete Oxidationsbeständigkeit bei hohen Temperaturen. Er ist geeignet für den Einsatz als Trägermaterial für Katalysatoren in Abgassystemen, aber auch für Heizelemente.

Den in der EP 0 290 719 A1 und der EP 0 516 267 A1 beschriebenen Eisen-Chrom-Aluminium-Legierungen ist gemeinsam, dass sie Zugaben von Molybdän von bis zu 4 % ermöglichen und damit über den Mechanismus der Mischkristallhärtung die Erzeugung einer gewissen Warmfestigkeit möglich ist.

Die WO 2009/124530 A1 beschreibt eine Eisen-Chrom-Aluminium-Legierung mit hoher Lebensdauer und geringer Änderung des Warmwiderstands mit (in Masse-%) 4,5 bis 6,5 % Aluminium, 16 bis 24 % Chrom, 1,0 bis 4,0 % Wolfram, 0,05 bis 0,7 % Silizium, 0,001 bis 0,5 % Mangan, 0,02 bis 0,1 % Yttrium, 0,02 bis 0,1 % Zirkon, 0,02 bis 0,1 % Hafnium, 0,003 bis 0,030 % Kohlenstoff, 0,002 bis 0,03 % Stickstoff, max. 0,01 % Schwefel, max. 0,5 % Kupfer, Rest Eisen sowie den üblichen erschmelzungsbedingten Verunreinigungen.

Bei der in der WO 2009/124530 A1 beschriebenen Eisen-Chrom-Aluminium-Wolfram-Legierung wird durch Zugaben von Wolfram über den Mechanismus der Mischkristallhärtung eine gewisse Warmfestigkeit erzeugt. Diese Legierung wurde für Heizleiteranwendungen optimiert. Deshalb ist die untere Grenze für den Aluminiumgehalt mit 4,5 % schon sehr hoch, so dass die Verarbeitbarkeit eher mäßig ist.

Die DE 199 28 842 A1 beschreibt eine ferritische oxidationsbeständige Eisen-Chrom-Aluminium-Yttrium-Hafnium-Legierung für Folien und Drähte mit verbesserter Lebensdauer und reduzierter Oxidationsgeschwindigkeit bei hohen Temperaturen und einem hohen spezifischen elektrischen Widerstand. Sie enthält (in Masse-%) 16 bis 22 % Chrom, 6 bis 10 % Aluminium, 0,02 bis 1,0 % Silizium, max. 0,5 % Mangan, 0,02 bis 0,1 % Hafnium, 0,02 bis 0,1 % Yttrium, max. 0,01 % Magnesium, max. 0,02 % Titan, max. 0,09 % Zirkon, max. 0,02 % Seltene Erdmetalle, max. 0,1 % Strontium, max. 0,1 % Kalzium, max. 0,5 % Kupfer, max. 0,1 % Vanadium, max. 0,1% Tantal, max. 0,1 % Niob, max. 0,03 % Kohlenstoff, max. 0,01 % Stickstoff, max. 0,01 % Bor, Rest Eisen und die üblichen erschmelzungsbedingten Verunreinigungen,

Bei der in der DE 199 28 842 A1 beschriebenen Eisen-Chrom-Aluminium-Legierung kann durch Zugaben von Molybdän und oder Wolfram von bis zu 2 % eine gewisse Warmfestigkeit erzeugt werden. Diese Legierung wurde als Trägerfolie für Abgaskatalysatoren mit sehr geringer Folienstärke optimiert. Deshalb ist die untere Grenze für den Aluminiumgehalt mit 6 % schon sehr hoch, so dass die Verarbeitung zu Halbzeug schwierig ist.

Die hier beschriebenen, Aluminiumoxid bildenden, Eisen-Chrom-Aluminium-Legierungen haben eine zu geringe Warmfestigkeit, da - wenn überhaupt - nur eine Steigerung der Warmfestigkeit über eine Mischkristallhärtung vorgesehen ist. Einige sind darüber hinaus zusätzlich schwer umformbar, bzw. verarbeitbar.

Vom Markt her werden z.B. für die schon erwähnten Wärmetauscher für die Festoxid-Brennstoffzellen Anforderungen an Produkte gestellt, die eine erhöhte Warmfestigkeit bzw. Kriechfestigkeit bei gleichzeitig guter Warmduktilität zur Vermeidung von sprödem Versagen, eine sehr geringe Chromverdampfungsrate, die weit unter der von Chrom-Manganoxiden liegt sowie eine sehr gute Oxidations- bzw. Korrosionsbeständigkeit haben, und zwar unter Beibehaltung einer akzeptablen Verformbarkeit und Verarbeitbarkeit bei Raumtemperatur. Damit sollen Einsatztemperaturen der Legierung bis zu 900°C ohne weitere Schutzschichten möglich werden.

Diese Anforderungen an die Chromverdampfung lässt sich nur mit Legierungen erfüllen, die eine stabile, dichte α-Aluminiumoxidschicht bilden, die eine geringe Menge an Cr Verunreinigungen enthält und damit praktisch keine Chromverdampfung zeigt. α- Aluminiumoxidschichten bewirken eine deutlich bessere Oxidations- und Korrosionsbeständigkeit als Chromoxidschichten. Dabei ist allerdings darauf zu achten, dass keine übermäßige Bildung von nicht dichten metastabilen Aluminiumoxiden stattfindet.

Deshalb ist es die Aufgabe der Erfindung einen ferritischen α-Aluminiumoxidbildner zu konzipieren, der eine erhöhte Warmfestigkeit (gemessen als Warmstreckgrenze und -zugfestigkeit im Warmzugversuch) bzw. Kriechfestigkeit bei gleichzeitig guter Warmduktilität mit einer Dehnung von mindestens 30 % bei Anwendungstemperatur, die sehr gute Oxidations- bzw. Korrosionsbeständigkeit einer $\alpha$-Aluminiumoxidschicht und zwar unter Beibehaltung einer akzeptablen Verformbarkeit, gemessen als plastische Verformung im Zugversuch mit einer Dehnung > 18% bei Raumtemperatur vereinigt.

Diese Aufgabe wird gelöst durch eine Eisen-Chrom-Aluminium-Legierung mit verbesserter Warmfestigkeit, geringer Chromverdampfungsrate und guter Verarbeitbarkeit mit (in Masse-%) 2,0 bis 4,5 % Al, 12 bis 25 % Cr, 1,0 bis 4 % W, 0,25 bis 2,0 % Nb, 0,05 bis 1,2 % Si, 0,001 bis 0,70 % Mn, 0,001 bis 0,030 % C, 0,0001 bis 0,05 % Mg, 0,0001 bis 0,03 % Ca, 0,001 bis 0,030 % P, max. 0,03 % N, max. 0,01 % S, zusätzlich enthaltend Yttrium 0,01 bis 0,10 %, insbesondere 0,03 - 0,09 %, Hafnium 0,01 bis 0,10 %, insbesondere 0,02 - 0,08 %; Zirkon 0,01 bis 0,10 %, insbesondere 0,02 - 0,08 %, wobei W durch 1 bis 4 % Mo werden kann, wobei Y ganz oder teilweise durch 0,01 bis 0,10 % mindestens eines der Elemente Sc und/oder La und/oder Cer ersetzt werden kann und wobei Hf oder Zr ganz oder teilweise durch 0,01 bis 0,1 % des Elementes Ti ersetzt werden kann, bedarfsweise des Weiteren enthaltend max. 1,0 % Nickel, max, 1,0 % Co, max. 0,5 % Kupfer, max. 0,1 % Vanadium, 0,001 bis 0,010 % Sauerstoff und/oder 0,0001 - 0,008 % Bor, Rest Eisen und den üblichen erschmelzungsbedingten Verunreinigungen, wie insbesondere Pb mit max. 0,002 %, Zr mit max. 0,002 % und Sn mit max. 0,002 %, wobei die Legierung folgende Formeln erfüllt:

36 % < Cr + 3*(Al+ Si) + 4,6*Mo + 5,2*W + 10*Nb, wobei Cr, Al, Si, Mo, W und Nb der Legierungsgehalt dieser Elemente Masse-% ist (Formel 1a).

0,2 * Nb ≤ Si ≤ 0,7* Nb, wobei Si und Nb der Legierungsgehalt dieser Elemente in Masse-% ist (Formel 2).

19 % < Cr +4*Nb + 21,6* Min(Si ; 0,5*Nb), wobei Cr, Si und Nb der Legierungsgehalt dieser Elemente in Masse-% ist und Min(Si ; 0,5* Nb) der kleinere Wert von Si und 0,5* Nb ist (Formel 3a).

Ein weiterer Vorteil ist gegeben, wenn auch die folgende Formel erfüllt wird:

$$19\ \% < Cr + 4{*}Nb + 21{,}6{*}\ Min(Si;\ 0{,}5{*}Nb)\ (Formel\ 3a),$$

wobei Cr, Si und Nb der Legierungsgehalt dieser Elemente in Masse-% ist und Min(Si ; 0,5* Nb) der kleinere Wert von Si und 0,5* Nb ist.

Von Vorteil kann auch sein, wenn die Formel 3a wie folgt modifiziert wird:

$$21\% < Cr + 4{*}Nb + 21{,}6{*}\ Min(Si;\ 0{,}5{*}Nb)\ (Formel\ 3b),$$

Der Spreizungsbereich für das Element Chrom liegt zwischen 12 und 25 %, wobei, in Abhängigkeit vom Einsatzfall, Chromgehalte wie folgt gegeben sein können und abhängig vom Einsatzfall in der Legierung eingestellt werden.

- 14 bis 23%
- 16 bis 23 %.

Der Aluminiumgehalt liegt zwischen 2,0 und 4,5 %, wobei auch hier, je nach Einsatzbereich der Legierung, Aluminiumgehalte wie folgt gegeben sein können:

- 2,5 bis 4,5 %
- 3,0 bis 4,5 %
- 3,0 bis 4,0 %.

Der Wolframgehalt in der Legierung liegt zwischen 1,0 und 4,0 %. Bevorzugt kann er auch eingestellt werden mit einem Spreizungsbereich von

- 1,5 bis 3,0 %.

Wolfram kann auch ganz oder teilweise durch Mo und/oder Ta ersetzt werden.

Die Legierung kann 0,25 bis 2,0 % Niob enthalten. Bevorzugt kann Nb innerhalb des Spreizungsbereiches wie folgt in der Legierung eingestellt werden:

- 0,30 % bis 1,2 %.

Der Siliziumgehalt liegt zwischen 0,05 und 1,20 %. Bevorzugt kann Si innerhalb des Spreizungsbereiches wie folgt in der Legierung eingestellt werden:

Der Spreizungsbereich für das Element Chrom liegt zwischen 12 und 25 %, wobei, in Abhängigkeit vom Einsatzfall, Chromgehalte wie folgt gegeben sein können und abhängig vom Einsatzfall in der Legierung eingestellt werden.

- 14 bis 23 %
- 16 bis 23 %.

Der Aluminiumgehalt liegt zwischen 2,0 und 4,5 %, wobei auch hier, je nach Einsatzbereich der Legierung, Aluminiumgehalte wie folgt gegeben sein können:

- 2,5 bis 4,5 %
- 3,0 bis 4,5 %
- 3,0 bis 4,0 %.

Der Wolframgehalt in der Legierung liegt zwischen 1,0 und 4,0 %. Bevorzugt kann er auch eingestellt werden mit einem Spreizungsbereich von

- 1,5 bis 3,0 %.

Wolfram kann auch ganz oder teilweise durch Mo ersetzt werden.
Die Legierung kann 0,25 bis 2,0 % Niob enthalten. Bevorzugt kann Nb innerhalb des Spreizungsbereiches wie folgt in der Legierung eingestellt werden:

- 0,30 % bis 1,2 %.

Der Siliziumgehalt liegt zwischen 0,05 und 1,20 %. Bevorzugt kann Si innerhalb des Spreizungsbereiches wie folgt in der Legierung eingestellt werden:

0,05 - 1,0 %
0,09 - 1,0 %.

Gleiches gilt für das Element Mangan, das mit 0,001 bis 0,70 % in der Legierung enthalten sein kann. Alternativ ist auch folgender Spreizungsbereich denkbar:

- 0,05 - 0,40 %.

Die Legierung enthält 0,001 bis 0,030 % Kohlenstoff. Bevorzugt kann C innerhalb des Spreizungsbereiches wie folgt in der Legierung eingestellt werden:

- 0,002 - 0,020 %.
- 0,002 - 0,015 %.

Auch Magnesium ist in Gehalten 0,0001 bis 0,05 % gegeben. Bevorzugt besteht die Möglichkeit, dieses Element wie folgt in der Legierung einzustellen:

- 0,0001 - 0,03 %
- 0,0001 - 0,02 %.

Die Legierung enthält des Weiteren Kalzium in Gehalten zwischen 0,0001 und 0,03 %. Bevorzugt besteht die Möglichkeit, dieses Element wie folgt in der Legierung einzustellen.

- 0,0001 - 0,02 %
- 0,0001 - 0,01 %.

Die Legierung enthält des Weiteren Phosphor in Gehalten zwischen 0,001 und 0,030 %. Bevorzugt kann sie 0,010 bis 0,025 % P beinhalten.

Das Element Stickstoff ist mit max. 0,03 % in der Legierung enthalten. Bevorzugte Gehalte können wie folgt gegeben sein:

- max. 0,020 %
- max. 0,012 %.

Das Element Schwefel ist mit max. 0,01 % in der Legierung enthalten. Bevorzugte Gehalte können wie folgt gegeben sein:

- max. 0,005 %.

Die Werkstoffeigenschaften können bedarfsweise durch Zugaben des Elements Yttrium in Gehalten von 0,01 bis 0,10 % verbessert werden. Bevorzugt kann Yttrium innerhalb des Spreizungsbereiches wie folgt in der Legierung eingestellt werden:

- 0,03 - 0,09 %.

Wahlweise kann auch Hafnium in Gehalten von 0,01 bis 0,10 % eingesetzt werden. Bevorzugt kann es innerhalb des Spreizungsbereiches wie folgt in der Legierung eingestellt werden:

- 0,02 - 0,08 %.

Wahlweise kann auch Zirkon in Gehalten von 0,01 bis 0,10 % vorgesehen werden. Bevorzugt kann es innerhalb des Spreizungsbereiches wie folgt in der Legierung eingestellt werden:

- 0,02 - 0,08 %.

Wahlweise kann Yttrium ganz oder teilweise ersetzt werden durch 0,01 bis 0,10 % Lanthan und/oder 0,01 bis 0,10 % Cer und/oder 0,01 bis 0,10 % Scandium.
Wahlweise kann Hafnium oder Zirkon ganz oder teilweise ersetzt werden durch das Element Titan.
Des Weiteren kann die Legierung max. 1,0 % Nickel enthalten, das darüber hinaus noch wie folgt eingeschränkt werden kann:

- max. 0,5 %.

Des Weiteren kann die Legierung max. 1,0% Kobalt enthalten, der darüber hinaus noch wie folgt eingeschränkt werden kann:

- max. 0,5 %.

Das Element Kupfer kann mit max. 0,50 % in der Legierung enthalten sein.
Des Weiteren kann in der Legierung max. 0,1 % Vanadium enthalten sein.
Die Elemente Bor und Sauerstoff können wahlweise wie folgt in der Legierung enthalten sein:

- Bor 0,0001 - 0,008 %
- Sauerstoff 0,001 - 0,010 %.

Schließlich können an Verunreinigungen noch die Elemente, Blei, Zink und Zinn in Gehalten wie folgt gegeben sein:

| | |
|---|---|
| Pb | max. 0,002 % |
| Zn | max. 0,002 % |
| Sn | max. 0,002 %. |

Die erfindungsgemäße Legierung lässt sich gut in den Produktformen Band, Blech, Stange und Draht herstellen und verwenden.

Die erfindungsgemäße Legierung wird als Band bevorzugt im Dickenbereich von 0,02 mm bis 3 mm eingesetzt.

Die erfindungsgemäße Legierung wird als Draht bevorzugt im Durchmesserbereich von 0,01 bis 12 mm eingesetzt.

Die erfindungsgemäße Legierung lässt sich zum Beispiel in einer Festoxid-Brennstoffzelle, insbesondere als nicht leitfähiger Teil von Interkonnektorplatten und als Bauteil in den Zusatzaggregaten einer Festoxid-Brennstoffzelle, wie z. B. in einem Wärmetauscher verwenden. Sie lässt sich weiterhin als Bauteil in heißen Gasen, auch mit einem geringem Sauerstoffpartialdruck und/oder Kohlenstoff, Stickstoff und/oder Wasserdampf, enthaltenden Anteilen verwenden. Auch ist eine Verwendung als Trägerfolie und/oder Drahtgeflecht in metallischen Abgaskatalysatoren oder als Heizelement möglich.

Der Verwendungsbereich der erfindungsgemäßen Legierung geht hinauf bis zu Temperaturen von 1100°C. Besonders vorteilhaft ist eine Verwendung der Legierung bis 1000 °C.

## Beispiele

Als Standardlegierungen nach dem Stand der Technik standen Crofer 22 H, Aluchrom W und Aluchrom 418 YHf zur Verfügung. Diese Legierungen wurden großtechnisch im 30 t Lichtbogenofen an Luft erschmolzen, einer Behandlung in einer VOD (Vakuum Oxidation Decarburation) Anlage unterzogen und in Blöcke gegossen. Diese wurden an Blech bzw. Warmband warm gewalzt. Das Blech bzw. Warmband wurde lösungsgeglüht. Das Blech oder Warmband wurde geschliffen, mit Zwischenglühungen kalt gewalzt an Enddicke und lösungsgeglüht in einem Blankglühdurchlaufofen.

Die Versuchsschmelzen wurden in einem Vakuuminduktionsofen erschmolzen. Die abgegossenen Blöcke wurden an 12 mm Dicke und 4 mm warm gewalzt. Die warm gewalzten Bleche wurden lösungsgeglüht. Das 4 mm Blech wurde geschliffen, kalt gewalzt an Enddicke (ca. 1,5 mm), ggf. mit Zwischenglühungen und lösungsgeglüht in einem Blankglühdurchlaufofen.

In den Tabellen 1 und 2 sind die großtechnisch erschmolzenen Legierungen nach dem Stand der Technik (T) und die Versuchschargen (LB vor der Chargennummer) angeführt. Die erfindungsgemäßen Legierungen sind mit einem E, nicht erfindungsgemäße Versuchschargen mit einem V, gekennzeichnet.

Crofer 22 H ist eine Legierung mit ca. 22 % Cr, ca. 0,45 % Mn, ca. 0,25 % Si, ca. 0,51 % Nb, ca. 2% W, ca. 0,06 % Ti, Rest Fe. Sie bildet die vorab bereits beschriebene zweilagige Oxidschicht aus einem Chrom-Mangan-Spinell oberhalb einer Chromoxidschicht. Außerdem besitzt sie auf Grund des Wolframgehaltes (Mischkristallhärtung) und der Bildung der Laves-Phasen intermetallische Phasen vom Typ $Fe_2(M, Si)$ oder $Fe_7(M, Si)_6$ mit Nb und Wolfram eine sehr gute Warmfestigkeit. Die Laves-Phase wird zusätzlich durch den Si-Gehalt stabilisiert.

Aluchrom W und Aluchrom 418 YHf sind 2 kommerzielle Eisen-Chrom-Aluminium-Legierungen mit Zugaben von sauerstoffaffinen Elementen, wie Y, Zr und Hf zur Verbesserung der Oxidationsbeständigkeit. Aluchrom W besteht aus ca. 14,5 % Chrom, ca. 4,5 % Aluminium, ca. 0,2 % Zr, Rest Eisen. Aluchrom 418 YHf besteht aus ca. 18 % Chrom und ca. 4 % Aluminium, 0,2 % Zr, Rest Eisen.

Die Versuchsschmelzen haben ca. 19,5 % Chrom und ca. 3,5% Aluminium und unterschiedliche Gehalte an Silizium (0,1 bis 0,31 %) an Wolfram (0,01 bis 2,04 %), Molybdän (0,001 bis 2,0 %) und Kobalt (0,01 bis 3,04 %). Untersucht wurden an ihnen die mechanischen Eigenschaften bei Raumtemperatur zur Feststellung der Verarbeitbarkeit, der Einfluss der verschiedenen Elemente auf die Warmfestigkeit bzw. Kriechfestigkeit, wobei sowohl Zusätze zur Erhöhung des Anteils der Mischkristallverfestigung als auch zur Verfestigung durch Ausscheidungen einer intermetallischen Phase vom Typ $Fe_2(M, Si)$ oder $Fe_7(M, Si)_6$ ausgewählt wurden. Sodann wurde überprüft, ob diese Zusätze die Fähigkeit der Eisen-Chrom-Aluminium-Legierung zur $\alpha$-Aluminiumoxidbildung wesentlich beeinträchtigen.

## Mechanische Eigenschaften bei Raumtemperatur.

Die Verformbarkeit wird in einem Zugversuch nach DIN 50125 bei Raumtemperatur bestimmt. Dabei wird die Dehngrenze $R_{p0.2}$, die Zugfestigkeit $R_m$ und die Dehnung A bis zum Bruch bestimmt. Die Dehnung A wird an der gebrochenen Probe aus der Verlängerung der ursprünglichen Messstrecke $L_0$ bestimmt:

$$A = (L_U - L_0)/L_0 \; 100\% = \Delta L/ L_0 \; 100\%$$

Mit $L_u$ = Messlänge nach dem Bruch.

Je nach Messlänge wird die Bruchdehnung mit Indizes versehen:

Messlänge $L_0 = 5 \cdot d_0$ bzw. $L_0 = 5,65 \cdot \sqrt{S_0}$

Messlänge $L_0 = 10 \cdot d_0$ bzw. $L_0 = 11{,}3 \cdot \sqrt{S_0}$

oder z.B. $A_{L=50}$, für die frei gewählte Messlänge L = 50 mm.

($d_0$ Anfangdurchmesser, $S_0$ Anfangsquerschnitt einer Flachprobe)

Die Größe der Dehnung A im Zugversuch bei Raumtemperatur kann als Maß für die Verformbarkeit angenommen werden.

Die Versuchsergebnisse sind in Tabelle 3 aufgelistet. Sie wurden an Flachzugproben mit Dicken zwischen 0,23 und 1,50 mm durchgeführt. Alle untersuchten Legierungen - die großtechnischen Legierungen Aluchrom W, Aluchrom 418 YHf und Crofer 22 H - und die Versuchslegierungen haben eine Dehnung $A_{50}$ größer 18 % und erfüllen damit die Forderung der Verarbeitbarkeit. Die Zugabe von Nb, W, Mo und Co und Kombinationen von Mo und W mit/ohne Si zu einer Legierung mit 19 % Cr, 3,5 % Al, Rest Fe beeinträchtig die Verformbarkeit und damit die Verarbeitbarkeit nicht.

**Warmzugversuche bei 900°C.**

Für die Warmzugversuche wurden Flachzugproben aus 1,5 mm dicken Blechen, in einem Fall auch aus 0,31 mm dickem Blech, hergestellt. Selbige hatten eine Ausgangsmesslänge für die Längenmessung von 10 mm. Die Warmzugversuche wurden bei 900°C durchgeführt. Es wurden Versuche mit zwei Verformungsgeschwindigkeiten, einmal $10^{-3}$ 1/s (Bereich für Zugversuche) und einmal $10^{-5}$ 1/s (zur Simulation der Kriechfestigkeit) durchgeführt. Die Proben waren vor dem Start eines Versuches für 1,5 Stunden zum Temperaturausgleich auf Prüftemperatur.

Die Versuchsergebnisse sind in Tabelle 4 aufgelistet. Alle untersuchten Legierungen - die großtechnischen Legierungen Aluchrom W, Aluchrom 418 YHf und Crofer 22 H - und die Versuchslegierungen hatten bei 900°C eine Dehnung $A_{50}$ oberhalb von 30 % sowohl bei einer Verformungsgeschwindigkeit von $10^{-3}$ 1/s als auch bei $10^{-5}$ 1/s. und erfüllen damit die Forderung nach einer guten Warmduktilität.

Die Zugabe von Kombinationen aus Nb, W, Mo und Kombinationen aus Mo und W zu einer Legierung mit ca. 19 % Cr, ca. 3,5 % Al, Rest Fe erhöht die Zugfestigkeit $R_m$ gegenüber Aluchrom W und Aluchrom 418 YHf sowohl bei einer Verformungsgeschwindigkeit von $10^{-3}$ 1/s als auch bei $10^{-5}$ 1/s. Bei der Verformungsgeschwindigkeit von $10^{-3}$1/s wird die Warmfestigkeit der erfindungsgemäßen Legierung noch über die Warmfestigkeit vom Crofer 22 H gesteigert. Bei einer Verformungsgeschwindigkeit von $10^{-5}$ 1/s hat die erfindungsgemäße Eisen-Chrom-Aluminium-Legierung eine ähnlich gute Festigkeit wie Crofer 22 H.

Diese guten Eigenschaften bezüglich der Warmfestigkeit bleiben bei einer Variation der verschiedenen Inhaltsstoffe der Legierung erhalten, wenn 36 % < Cr + 3*(Al + Si) + 4,6*Mo + 5,2*W + 10*Nb (Formel 1 a bzw. F1 in den Tabellen 1 bis 4) erfüllt ist, wobei diese Formel insbesondere die Anteile der Mischkristallhärtung berücksichtigt. Diese Formel wird durch die erfindungsgemäße Legierung erfüllt.

Des Weiteren bleiben die guten Eigenschaften einer höheren Festigkeit bei 900°C insbesondere bei sehr geringen Verformungsgeschwindigkeiten, wie $10^{-5}$ 1/s bei einer Variation der verschiedenen Inhaltsstoffe der Legierung erhalten, wenn 19% < Cr + 4*Nb + 21,6* Min(Si ; 0,5*Nb), (Formel 3a bzw. F3 in den Tabellen 1 bis 4) erfüllt ist, wobei diese Formel insbesondere die Anteile zur Verfestigung die durch Ausscheidungen einer intermetallischen Phase vom Typ $Fe_2(M, Si)$ oder $Fe_7(M, Si)_6$ entstehen berücksichtigt. Diese Formel wird durch die erfindungsgemäße Legierung erfüllt.

Der Anteil des Siliziums, der zur Förderung der Laves Phasenbildung und ihrer Stabilisierung notwendig ist, kann in einem gewissen Bereich in Abhängigkeit vom Niobgehalt variieren. Dieser Bereich wird durch 0,2 * Nb $\leq$ Si $\leq$ 0,7 * Nb (Formel 2) definiert. Die erfindungsgemäße Legierung liegt in diesem Bereich.

**Oxidationsversuche an Luft**

Für den Oxidationsversuch werden Proben mit den Maßen 25 mm x 15 mm x Materialdicke aus dem Band herausgeschnitten Die Kanten wurden geschliffen, die Hauptflächen wurden wie gewalzt gelassen. Von allen Legierungen wurden Banddicken von 1,5 mm untersucht. Von den Legierungen nach dem Stand der Technik wurden zusätzlich Banddicken von 0,23 mm (Aluchrom 4 18 YHf) und 0,4 mm (Aluchrom W) untersucht.

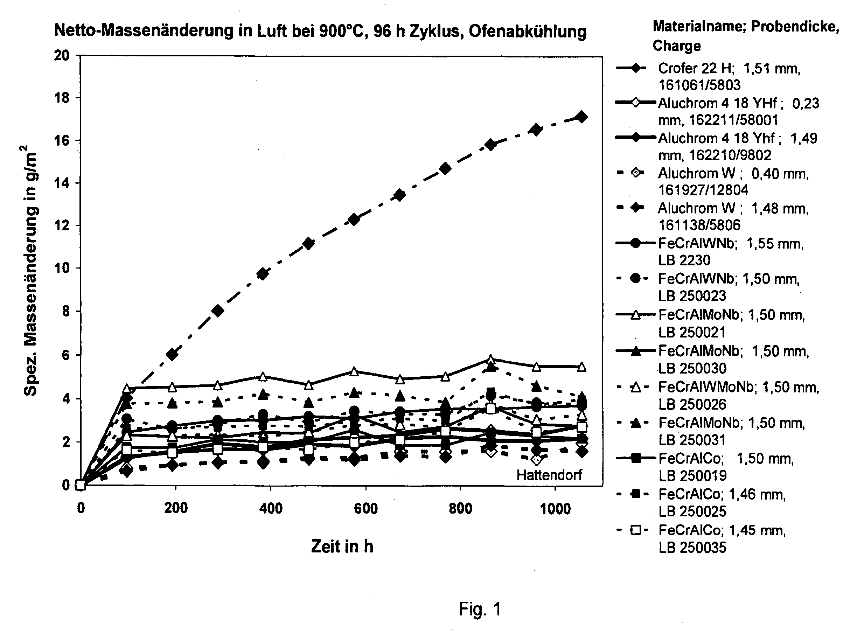

Der Oxidationstest wurde bei 900°C an Luft durchgeführt. Die Proben wurden alle 96 Stunden auf Raumtemperatur abgekühlt, um die Gewichtsänderung messen zu können. Insgesamt wurden 11 Zyklen durchgeführt. Die Proben wurden vor dem Versuch gewogen und in Aluminiumoxidtiegeln mit bekannten Ausgangsgewichten gestellt, um ggf. Abplatzungen auffangen zu können. Während jeder Versuchsunterbrechung wurden die Gewichtsänderungen der Proben zum Ausgangzustandsgewicht und die Gewichtsänderung vom Tiegel und den Abplatzungen zum Ausgangsgewicht vor dem Versuch bestimmt. Die Gewichtsänderungen sind in Abbildung 1, bezogen auf die Ausgangsfläche der Proben, dargestellt (Spezifische Massenänderung). Von jedem Material wurden mindestens 3 Proben dem Test unterzogen, von denen der Mittelwert gebildet wurde.

Bei keiner Probe zeigten sich Abplatzungen. Die spezifische Massenänderung der Proben (Netto-Massenänderung) in Abhängigkeit von der Testzeit zeigt Abbildung 1. Crofer 22 H zeigt die typische Kurvenform für parabolisches Oxidwachstum. Er zeigt die höchste spezifische Massenänderung. Alle getesteten Eisen-Chrom-Aluminium-Legierungen (Versuchchargen und Chargen nach dem Stand der Technik) haben eine deutlich geringere spezifische Massenänderung. Nach einer größeren Massenzunahme in den ersten 96 h ändert sich die dann erreichte Massenänderung kaum noch. Dies ist typisch dafür, dass sich zu Beginn der Oxidation etwas metastabiles Aluminiumoxid gebildet hat, was eine größere Gewichtszunahme in den ersten 96 Stunden zur Folge hatte , dann aber der Übergang zur vollständigen Bildung von $\alpha$-Aluminiumoxid stattgefunden hat, mit der Folge einer nicht messbaren Gewichtszunahme in der restlichen Testzeit von 960 h (siehe z.B. The oxidation behavior of NIAL 1. phase-transformations in the alumina scale during oxidation of NIAL and NIAL-CR alloys; Brumm MW, Grabke HJ; Corrosion Science 33 Issue: 11 (1992), Seite 1677 ff und Pragnell W.M., Evans H.E., Naumenko D., Quadakkers W.J. Aluminium depletion in FeCrAlY Steel During Transitional Alumina Formation, Microscopy of Oxidation, Materials at High Temperatures 22 (2005), 399 - 404). Die Legierungen nach dem Stand der Technik zeigen die geringste Massenänderung durch metastabile Aluminiumoxide, die Zugaben wie Nb, W, Mo erhöhen die Neigung zur metastabilen Oxidbildung in der Anfangsphase leicht. Aber für alle Legierungen erfolgt zuverlässig der Übergang zur $\alpha$-Aluminiumoxidbildung.

**Warmstauchversuche bei 900°C**

Die Untersuchung der Warmstauchgrenze erfolgte mit Hilfe eines Abschreck- und Umformdilatometers DIL 805 der Firma Bähr-Thermoanalyse. Damit ist eine präzise Temperaturführung unter Vakuum bei gleichzeitigem Umformen möglich. Die verwendeten Proben waren zylindrisch und hatten eine Länge von 10 mm und einen Durchmesser von 5 mm.

Zur Untersuchung des Ausscheidungsverhaltes auf die Warmstauchgrenze in Abhängigkeit der Zeit wurden die Dilatometerproben in einem Muffelofen lösungsgeglüht und für 1 h, 24 h, 192 h, 720 h und 1440 h bei 900°C ausgelagert. Die Umformung bei 900°C geschah durch uniaxiales Pressen ohne Formzwang bei einem Umformweg von 5 mm mit einer konstanten Dehnrate von $10^{-3}$ 1/s. Abschließend erfolgte eine Gasabschreckung mit Stickstoff auf Raumtemperatur.

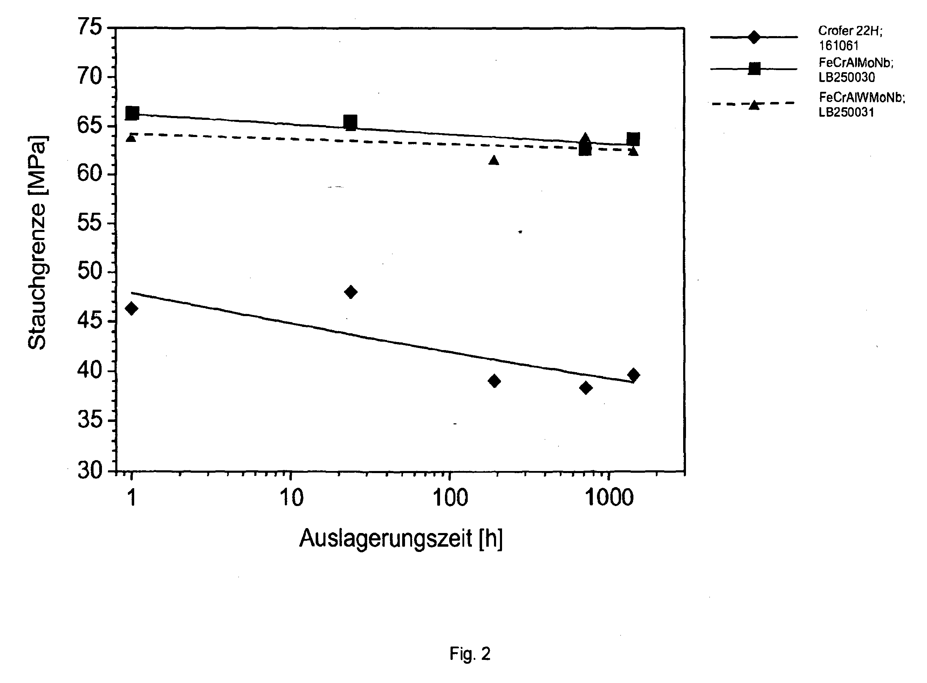

Die Versuchsergebnisse für 1 h Auslagerung sind in Tabelle 5 aufgelistet und in Abbildung 2 graphisch dargestellt.

Die erfindungsgemäßen Laborchargen (LB 250023, LB 250030 und LB 250031) zeigen bei 900°C eine höhere Warmfestigkeit als die Legierung nach dem Stand der Technik Crofer 22 H und die Versuchsschmelze LB 250031. Die erhöhte Warmfestigkeit der erfindungsgemäßen Legierungen (LB 250030 und LB 250031) bleibt auch nach längeren Auslagerungszeiten (bis zu 1440 h) erhalten. Der geringere Verlust der Warmfestigkeit über der Auslagerungszeit hängt mit der Stabilität der Laves Phasen Ausscheidung zusammen. Durch die Kombination von Nb und Si ist die Ausscheidung der Laves Phase sowohl bei den erfindungsgemäßen Laborschmelzen als auch bei Crofer 22 H sehr stabil. Diese wirken als Hindernis beim Kornvergröberungsprozess und tragen zur Stabilisierung der Warmfestigkeit über die Zeit bei. LB 250030 und LB 250031 haben einen höheren Nb-Gehalt als Crofer 22 H. Das bedeutet, dass der Anteil an Laves Phase in diesen Laborschmelzen höher ist als im Crofer 22 H und sie deshalb stabiler über längere Auslagerungszeiten sind (Abbildung 2). Zusätzlich bewirken der Gehalt an W (LB 250023) bzw. an Mo (LB 250030) bzw. an einer Kombination aus W und Mo (LB 250031) und der Aluminiumgehalt der erfindungsgemäßen Chargen eine Mischkristallhärtung. Insbesondere aufgrund des Al-Gehaltes ist die Stauchgrenze in LB 250023, LB 250030 und LB 250031 deutlich höher als bei Crofer 22 H ohne Aluminium. Der Gehalt an Co in LB 250035 bewirkt keine merkliche zusätzliche Mischkristallhärtung, weshalb LB 250035 eine deutlich niedrigere Stauchgrenze als LB 250030 und LB 250031 hat.

**Sigma-Phasen-Bildung**

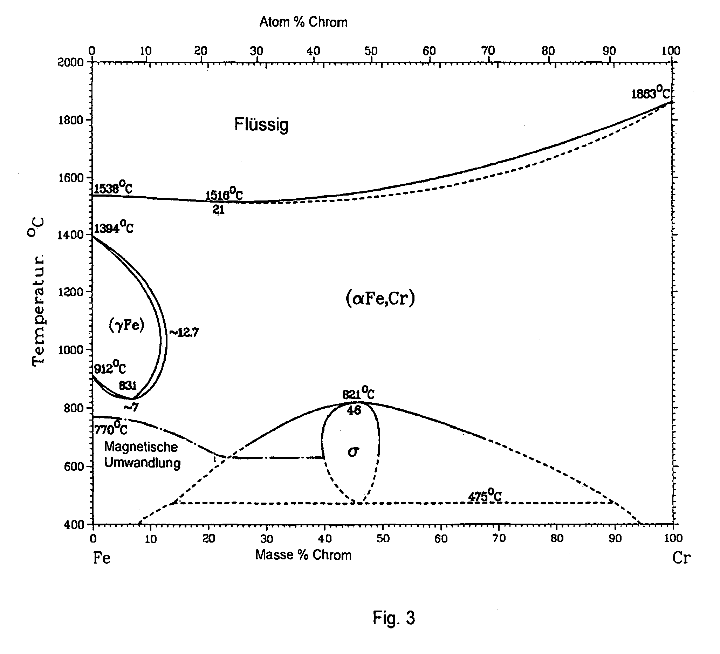

Im System Eisen-Chrom bildet sich die $\sigma$-Phase, die für ihre versprödende Wirkung bekannt und deshalb vermieden werden muss. Abbildung 3 zeigt das Phasendiagramm im Fe-Cr System. Die $\sigma$-Phase tritt oberhalb von 600 °C ab 22 % Cr auf. Auch wenn sich die Anwendungstemperatur oberhalb dieses Bereichs befindet, wird der kritische Bereich jedes Mal beim Aufheizen und Abkühlen des Bauteils durchlaufen. Es ist deshalb von Vorteil, wenn der Bereich, in welchem sich die $\sigma$-Phase in einer Legierung bildet, bei möglichst tiefen Temperaturen bei möglichst langen Zeiten liegt. Werden zu einer FeCr-Legierung weitere Elemente, wie Mo oder W, die nach Ralf Bürgel, Handbuch der Hochtemperaturwerkstofftechnik, 3. Auflage, Vieweg Verlag, Wiesbaden, 2006, Seite 349 bis 350 Tabelle 6.5, die $\sigma$-Phasen Bildung fördern in merklichen Mengen dazugegeben, so sollte die Auswirkung auf die $\sigma$-Phasenbildung genauer betrachtet werden.

Mit dem Program JMatPro von Thermotech lassen sich nicht nur Phasendiagramme sondern auch Temperatur-Zeit-Ausscheidungsdiagramme berechnen. Dieser Teil des Programms lässt sich dazu benutzen, die Möglichkeiten zur Bildung der $\sigma$-Phase abzuschätzen. Als Datenbasis für die Berechnungen wurde die Fe-Data Datenbank von Thermotech verwendet.

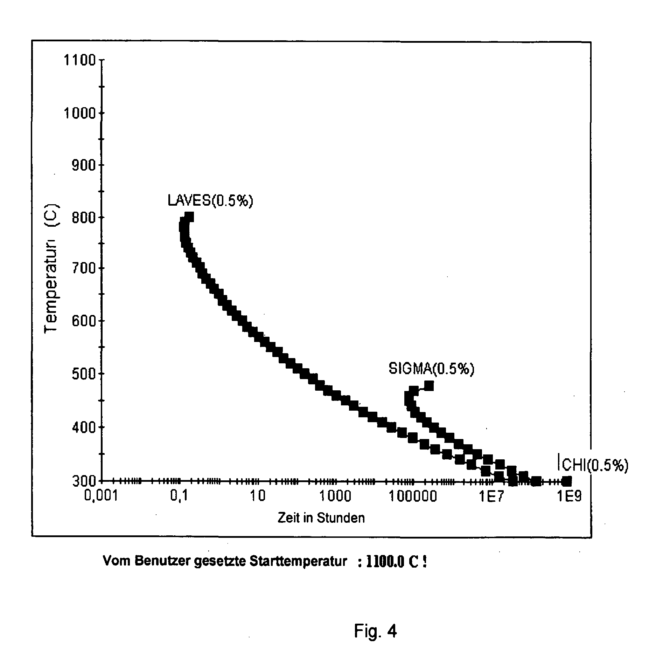

Abbildung 4 zeigt die mit JMatPro berechneten Temperatur - Zeit-Ausscheidungsdiagramme für Phasen mit einem Mol-Anteil größer 0,5 % nach einer Glühung bei 1100°C für Fe - 18,5 % Cr - 3,3% Al - 0,7 % Nb - 0,3 % Si - 0,15 % Mn - 0,002% C - 0,007 % N. Es zeigt sich dass sich die $\sigma$-Phase erst nach mehr als 100000 h bei 450°C bildet. Die $\chi$ -Phase tritt erst nach noch größeren Zeiten auf.

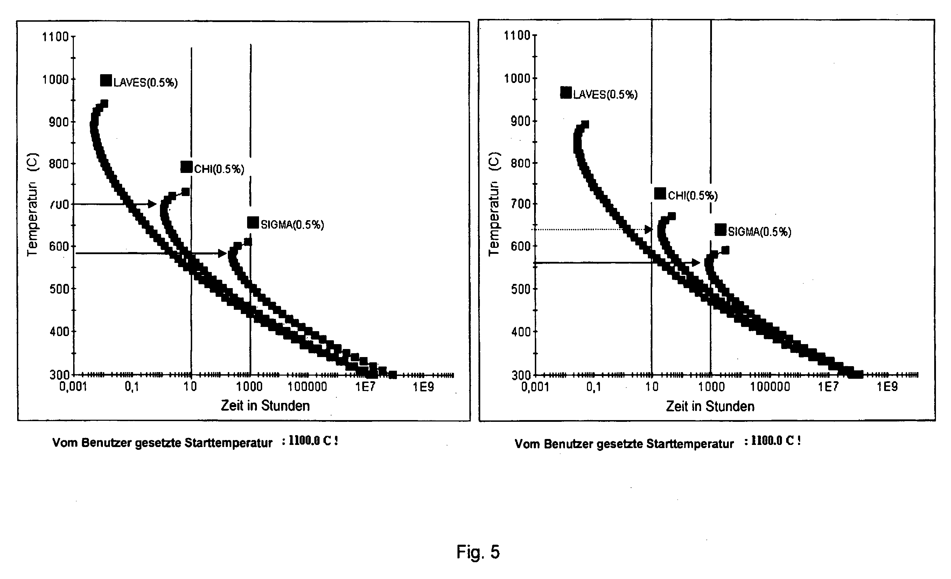

Abbildung 5 zeigt die mit JMatPro berechneten Temperatur - Zeit-Ausscheidungsdiagramme für Phasen mit einem Anteil größer 0,5% nach einer Glühung bei 1100°C für Fe - 18,5 % Cr - 3,3 % Al - 2 % Mo - 0,7 % Nb - 0,3 % Si- 0,15 % Mn - 0,002 % C - 0,007 % N (linkes Bild) und Fe - 18,5 % Cr - 3,3 % Al - 2 % W - 0,7 % Nb - 0,3 % Si - 0,15 % Mn - 0,002 % C - 0,007 % N (rechtes Bild). Für die Zugabe beider Elemente verkürzt sich die Zeit bis zum Auftreten der $\sigma$-Phase bzw. der $\chi$ -Phase. Es zeigt sich allerdings, dass die Bildung der $\sigma$-Phase und die der $\chi$ -Phase bei Zugabe von Molybdän bei höheren Temperaturen und kürzeren Zeiten auftritt, als bei einer Zugabe einer gleichen Menge an Wolfram (Nase der $\sigma$-Phase für 2 % W bei 560°C nach 838 h, für 2 % Mo bei 580°C schon nach 273 h; Nase der $\chi$-Phase für 2 % W bei 640°C nach 20,5 h, für 2 % Mo bei 685°C schon nach 1,27 h). Die Zugabe von W ist also, was die Vermeidung von spröden Phasen wie der $\sigma$-Phase oder der $\chi$ -Phase angeht, der von Molybdän vorzuziehen.

**Begründung der Grenzen**

Chromgehalte zwischen 12 und 25 Masse-% haben keinen entscheidenden Einfluss auf die Oxidationsbeständigkeit in FeCrAl-Legierungen, wie in J. Klöwer, Materials and Corrosion 51 (2000), Seiten 373 bis 385 nachzulesen ist. Allerdings ist ein bestimmter Chromgehalt nötig, da Chrom die Bildung der besonders stabilen und schützenden $\alpha$ - $Al_2O_3$ Schicht fördert. Deshalb liegt die Untergrenze bei 12 %. Chromgehalte > 25 % erschweren die Verarbeitbarkeit der Legierung.

Ein Aluminiumgehalt von 2,0 % ist mindestens notwendig (siehe DE 101 57 749 A1) damit eine FeCrAl Legierung eine geschlossene Aluminiumoxidschicht bilden kann. Al-Gehalte > 4,5 % erschweren die Verarbeitbarkeit merklich.

Die Zugabe von Nb bewirkt die Bildung einer Laves-Phase vom Typ $Fe_2(M, Si)$ oder $Fe_7(M, Si)_6$. Dadurch wird die gute Warmfestigkeit insbesondere bei niedrigen Umformgeschwindigkeiten erhöht. Für eine merkliche Verbesserung der Warmfestigkeit ist ein Mindestgehalt von 0,25 % erforderlich. Bei einem zu hohen Nb-Gehalt wird die Verarbeitbarkeit der Legierung beeinträchtigt. Die Obergrenze liegt deshalb bei 2 % (siehe J. Froitzheim, G.H. Meier, L. Niewolak, P.J. Ennis, H. Hattendorf, L. Singheiser, W.J. Quadakkers, "Development of high strength ferritic steel for interconnect application in SOFCs", Journal of Power Sources 178 (2008) 163-173 und K. Yamamoto, Y. Kimura, F.-G. Wei, Y. Mishima, Design of Laves phase strengthened ferritic heat resisting steels in the Fe-Cr-Nb(-Ni) system, Materials Science & Engineering. A 329 -331, Structural materials (2002 , p. 249-254; N. Fujita, K. Ohmura, M. Kikuchi, T. Suzuki, S. Funaki, I. Hiroshige, Effect of Nb on high-temperature properties for ferritic stainless steel. Scripta Materialia, Vol. 35, No. 6 1996, pp. 705-710).

Wolfram erhöht die Warmfestigkeit der Legierung, insbesondere bei 900°C, einmal durch Mischkristallverfestigung, andererseits durch eine Verfeinerung und weitere Stabilisierung durch Mitwirkung an der Laves Phasenbildung durch Nb (siehe J. Froitzheim, G.H. Meier, L. Niewolak, P.J. Ennis, H. Hattendorf, L. Singheiser, W.J. Quadakkers, "Development of high strength ferritic steel for interconnect application in SOFCs", Journal of Power Sources 178 (2008) 163-173). Für eine merkliche Verbesserung der Warmfestigkeit ist ein Mindestgehalt von 1 % erforderlich. Bei einem zu hohen Gehalt wird die Verarbeitbarkeit der Legierung beeinträchtigt. Die Obergrenze liegt deshalb bei 4 %.

Eine Zugabe von Silizium stabilisiert und fördert die Laves Phasenbildung (siehe J. Froitzheim, G.H. Meier, L. Niewolak, P.J. Ennis, H. Hattendorf, L. Singheiser, W.J. Quadakkers, "Development of high strength ferritic steel for interconnect application in SOFCs", Journal of Power Sources 178 (2008) 163-173 und Y. Hosoi, N. Wade, S. Kunimitsu, T. Urita, Effect of Si and Mn on the precipitation behavior of Laves phase and toughness of 9Cr-2Mo steel. Transaction of the Iron and Steel Institute of Japan 26 1986). Außerdem erhöht nach J. Klöwer, Materials and Corrosion 51 (2000), Seiten 373 bis 385 die Zugabe von Silizium die Lebensdauer durch eine Verbesserung der Haftung der Deckschicht. Es ist deshalb ein Gehalt von mindestens 0,05 Masse-% Silizium erforderlich. Zu hohe Si-Gehalte erschweren die Verarbeitbarkeit der Legierung. Deshalb liegt die Obergrenze bei 1,2 %.

Für die Stabilisierung der Laves Phase ist es besonders günstig, wenn der Siliziumgehalt in einem bestimmten Bereich in Abhängigkeit des Niobgehalts liegt. Dieser vorteilhafte Bereich wird durch folgende Formel beschrieben:

$$0,2 * Nb \leq Si \leq 0,7* Nb \text{ (Formel 2)},$$

wobei Si und Nb der Legierungsgehalt dieser Elemente in Masse-% ist.

Die Zunahme der Warmfestigkeit wird insbesondere in einem bestimmten Bereich in Abhängigkeit von den verschiedenen Zugaben, die eine Erhöhung der Warmfestigkeit bewirken, beschrieben. Dieser vorteilhafte Bereich wird durch die beiden folgenden Formeln beschrieben:

$$36 < Cr + 3*(Al+ Si) + 4,6*Mo + 5,2*W + 10*Nb \quad \text{(Formel 1a)},$$

$$19 < Cr + 4*Nb + 21,6* \, Min(Si \, ; \, 0,5*Nb), \quad \text{(Formel 3a)},$$

wobei Cr, Al, Mo, W und Nb der Legierungsgehalt dieser Elemente in Masse-% ist und Min(Si; 0,5* Nb) der kleinere Wert von Si und 0,5*Nb ist.

Formel 1 berücksichtigt insbesondere die Anteile der Mischkristallverfestigung zur Warmfestigkeit, Formel 3 insbesondere die Anteile zu einer höheren Festigkeit bei hohen Temperaturen, wie 900°C, bevorzugt bei sehr langsamen Verformungsgeschwindigkeiten wie $10^{-5}$ 1/s, die durch Ausscheidungen einer intermetallischen Phase des Typs $Fe_2(M, Si)$ oder $Fe_7(M, Si)_6$ entstehen

Es ist ein Mindestgehalt von 0,01 % Mangan zur Verbesserung der Verarbeitbarkeit notwendig. Mangan wird auf 0,7 % begrenzt, da dieses Element die Oxidationsbeständigkeit reduziert.

Es ist ein Mindestgehalt von 0,001 % Kohlenstoff für eine gute Verarbeitbarkeit notwendig. C wird auf 0,03 % begrenzt, da dieses Element die die Laves-Phasen bildenden Elemente, insbesondere Nb, durch Karbidbildung reduziert.

Schon sehr geringe Mg-Gehalte verbessern die Verarbeitung durch das Abbinden von Schwefel, wodurch das Auftreten von niedrig schmelzenden NiS-Eutektika vermieden wird. Für Mg ist deshalb ein Mindestgehalt von 0,0001 % erforderlich. Bei zu hohen Gehalten können intermetallische Ni-Mg-Phasen auftreten, die die Verarbeitbarkeit wieder deutlich verschlechtern. Der Mg-Gehalt wird deshalb auf 0,05 % begrenzt.

Genauso wie Mg verbessern auch schon sehr geringe Ca-Gehalte die Verarbeitung durch das Abbinden von Schwefel, wodurch das Auftreten von niedrig schmelzenden NiS-Eutektika vermieden wird. Für Ca ist deshalb ein Mindestgehalt von 0,0001 % erforderlich. Bei zu hohen Gehalten können intermetallische Ni-Ca-Phasen auftreten, die die Verarbeitbarkeit wieder deutlich verschlechtern. Der Ca-Gehalt wird deshalb auf 0,03 % begrenzt.

Der Gehalt an Phosphor sollte kleiner 0,030 % sein, da dieses grenzflächenaktive Element die Oxidationsbeständigkeit beeinträchtigt. Ein zu niedriger P-Gehalt erhöht die Kosten. Der P-Gehalt ist deshalb $\geq$ 0,001 %.

Stickstoff reduziert die Oxidationsbeständigkeit. Der Stickstoffgehalt sollte maximal 0,03 % betragen, um die Bildung von die Verarbeitbarkeit verschlechternden Nitriden und eine Reduzierung der Oxidationsbeständigkeit zu vermeiden.

Die Gehalte an Schwefel sollten so gering wie möglich eingestellt werden, da dieses grenzflächenaktive Element die Oxidationsbeständigkeit beeinträchtigt. Es werden deshalb max. 0,010 % S festgelegt.

Zusätze von Sauerstoff affinen Elementen verbessern die Oxidationsbeständigkeit. Sie tun dies, indem sie in die Oxidschicht mit eingebaut werden und dort auf den Korngrenzen die Diffusionswege des Sauerstoffs blockieren.

Es ist ein Mindestgehalt von 0,01 % Y sinnvoll, um die die Oxidationsbeständigkeit steigernde Wirkung des Y zu erhalten. Die Obergrenze wird aus Kostengründen bei 0,10 % gelegt.

Es ist ein Mindestgehalt von 0,01 % Hf zweckmäßig, um die die Hochtemperaturfestigkeit und die Oxidationsbeständigkeit steigernde Wirkung des Hf zu erhalten. Die Obergrenze wird aus Kostengründen bei 0,10 % Hf gelegt.

Es ist ein Mindestgehalt von 0,01 % Zr sinnvoll, um die die Hochtemperaturfestigkeit und die Oxidationsbeständigkeit steigernde Wirkung des Zr zu erhalten. Die Obergrenze wird aus Kostengründen bei 0,10 % Zr gelegt.

Nickel wird auf max. 1,0 % begrenzt, da dieses Element die Kosten erhöht. Das Gleiche gilt für Kobalt.

Kupfer wird auf max. 0,5 % begrenzt, da dieses Element die Oxidationsbeständigkeit reduziert.

Bor verbessert die Kriechbeständigkeit. Deshalb sollte ein Gehalt von mindestens 0,0005 % vorhanden sein. Gleichzeitig verschlechtert dieses grenzflächenaktive Element die Oxidationsbeständigkeit. Es werden deshalb max. 0,008 % Bor festgelegt.

Der Sauerstoffgehalt muss kleiner 0,010 % sein, um die Herstellbarkeit der Legierung zu gewährleisten. Zu geringe Sauerstoff-Gehalte verursachen erhöhte Kosten. Der Sauerstoffgehalt sollte deshalb größer 0,001 %, jedoch kleiner 0,01 % sein.

Pb wird auf max. 0,002 % begrenzt, da dieses Element die Oxidationsbeständigkeit reduziert. Das Gleiche gilt für Zn und Sn.

Tabelle 1. Zusammensetzung (Teil 1) der untersuchten Legierungen. Alle Angaben in Masse-%, Eisen Rest,

| | Werkstoff Name | Charge | Cr | Ni | Mn | Si | Mo | Ti | Nb | Cu | Co | Al | W | F1 in % | F3 in % | Formel 2 | |
|---|---|---|---|---|---|---|---|---|---|---|---|---|---|---|---|---|---|
| | | | | | | | | | | | | | | | | 0,2*Nb in % | 0,7*Nb in % |
| T | Crofer 22 H | 161061 | 22,9 | 0,30 | 0,43 | 0,21 | 0,02 | 0,07 | 0,51 | 0,02 | 0,04 | 0,02 | 1,94 | 31,2 | 30,0 | 0,102 | 0,357 |
| T | Crofer 22 H | 161995 | 22,6 | 0,22 | 0,43 | 0,24 | 0,02 | 0,06 | 0,49 | 0,02 | 0,02 | 0,019 | 1,97 | 30,7 | 30,1 | 0,098 | 0,343 |
| T | Aluchrom W | 161138 | 14,9 | 0,11 | 0,38 | 0,21 | 0,01 | <0,01 | 0,01 | 0,02 | 0,02 | 4,69 | - | 19,7 | 15,1 | 0,002 | 0,007 |
| T | Aluchrom W | 161927 | 14,7 | 0,16 | 0,28 | 0,16 | 0,01 | <0,01 | 0,01 | 0,03 | 0,02 | 4,43 | - | 19,2 | 14,8 | 0,002 | 0,007 |
| T | Aluchrom W | 162118 | 14,9 | 0,13 | 0,38 | 0,22 | 0,01 | <0.01 | 0,01 | 0,03 | 0,02 | 4,54 | - | 19,5 | 15,0 | 0,002 | 0,007 |
| T | Aluchrom 418 YHF | 162210 | 18,3 | 0,17 | 0,19 | 0,17 | 0,01 | 0,01 | 0,01 | 0,03 | 0,02 | 4,21 | - | 22,6 | 18,5 | 0,002 | 0,007 |
| T | Aluchrom 418 YHF | 162211 | 18,4 | 0,16 | 0,17 | 0,15 | 0,01 | 0,01 | 0,01 | 0,04 | 0,02 | 4,36 | - | 22,9 | 18,6 | 0,002 | 0,007 |
| E | FeCrAlWNb | 2230 | 18,87 | 0,02 | 0,39 | 0,28 | 0,01 | 0,008 | 0,46 | 0,01 | 0,01 | 3,40 | 2,02 | 30,3 | 26,0 | 0,092 | 0,322 |
| E | FeCrAlWNb | 250023 | 18,82 | 0,03 | 0,14 | 0,10 | 0,001 | 0,003 | 1,00 | <0,01 | 0,07 | 3,44 | 2,04 | 34,3 | 27,1 | 0,200 | 0,700 |
| E | FeCrAlMoNb | 250021 | 19,05 | 0,03 | 0,15 | 0,30 | 1,94 | 0,002 | 0,73 | <0,01 | <0,01 | 3,48 | 0,10 | 32,6 | 29,2 | 0,146 | 0,511 |
| E | FeCrAlMoNb | 250030 | 18,43 | 0,02 | 0,15 | 0,31 | 2,00 | 0,009 | 0,72 | 0,01 | <0,01 | 3,27 | 0,01 | 31,6 | 28,7 | 0,144 | 0,504 |
| E | FeCrAlWMoNb | 250026 | 18,97 | 0,02 | 0,14 | 0,31 | 0,90 | 0,002 | 0,67 | <0,01 | 0,27 | 3,61 | 1,94 | 34,0 | 28,9 | 0,134 | 0,469 |
| E | FeCrAlWMoNb | 250031 | 19,00 | 0,03 | 0,15 | 0,31 | 1,03 | 0,007 | 0,68 | 0,01 | 0,01 | 3,30 | 2,01 | 34,3 | 29,0 | 0,136 | 0,476 |
| V | FeCrAlCo | 250019 | 18,75 | 0,03 | 0,15 | 0,30 | 0,001 | 0,006 | 0,95 | <0,01 | 2,8 | 3,34 | 0,01 | 29,1 | 30,3 | 0,190 | 0,665 |
| V | FeCrAlCo | 250025 | 18,77 | 0,04 | 0,15 | 0,25 | 0,020 | 0,003 | 0,61 | <0,01 | 2,97 | 3,32 | 0,01 | 26,6 | 27,2 | 0,122 | 0,427 |
| V | FeCrAlCo | 250035 | 18,75 | 0,03 | 0,17 | 0,27 | 0,020 | 0,035 | 0,68 | <0,01 | 3,04 | 3,37 | 0,12 | 27,4 | 28,0 | 0,136 | 0,476 |

T: Legierungen nach dem Stand der Technik, V: nicht erfindungsgemäße Legierungen, E: erfindungsgemäße Legierungen
F1 = Berechnung des rechten Teils von Formel 1a bzw. 1b; F3 = Berechnung des rechten Teils von Formel 3a bzw. 3b

Tabelle 2. Zusammensetzung (Teil 2) der untersuchten Legierungen. Alle Angaben in Masse-%, Eisen Rest

| | Werkstoff | Charge | C | S | N | P | Mg | Ca | La | Y | Zr | Hf | O |
|---|---|---|---|---|---|---|---|---|---|---|---|---|---|
| T | Crofer 22 H | 161061 | 0,007 | <0,002 | 0,015 | 0,014 | <0,01 | <0,01 | 0,079 | - | 0,004 | - | 0,002 |
| T | Crofer 22 H | 161995 | 0,009 | <0,002 | 0,018 | 0,017 | <0,01 | <0,01 | 0,049 | - | - | - | 0,002 |
| T | Aluchrom W | 161138 | 0,019 | <0,002 | 0,002 | 0,014 | <0,01 | 0,001 | - | - | 0,20 | - | 0,002 |
| T | Aluchrom W | 161927 | 0,019 | <0,002 | 0,006 | 0,014 | <0,01 | 0,002 | - | - | 0,15 | - | 0,002 |
| T | Aluchrom W | 162118 | 0,017 | <0,002 | 0,006 | 0,013 | <0,01 | 0,001 | - | - | 0,15 | - | 0,002 |
| T | Aluchrom 418 YHF | 162210 | 0,012 | <0,002 | 0,004 | 0,015 | <0,001 | <0,01 | - | 0,07 | 0,04 | 0,04 | 0,002 |
| T | Aluchrom 418 YHF | 162211 | 0,014 | <0,002 | 0,008 | 0,015 | <0,001 | <0,01 | - | 0,05 | 0,04 | 0,05 | 0,002 |
| E | FeCrAlWNb | 2230 | 0,0024 | 0,0015 | 0,008 | 0,017 | 0,0006 | 0,0002 | - | 0,042 | 0,043 | 0,032 | 0,002 |
| E | FeCrAlWNb | 250023 | 0,002 | 0,004 | 0,007 | 0,018 | 0,0006 | 0,0002 | - | 0,070 | 0,051 | 0,051 | 0,001 |
| E | FeCrAlMoNb | 250021 | 0,002 | 0,005 | 0,007 | 0,018 | 0,0006 | 0,0002 | - | 0,068 | 0,053 | 0,060 | 0,001 |
| E | FeCrAlMoNb | 250030 | 0,002 | 0,0025 | 0,01 | 0,014 | 0,0007 | 0,0002 | - | 0,057 | 0,051 | 0,051 | 0,002 |
| E | FeCrAlWMoNb | 250026 | 0,004 | 0,002 | 0,006 | 0,018 | 0,0005 | 0,0002 | - | 0,048 | 0,053 | 0,058 | 0,002 |
| E | FeCrAlWMoNb | 250031 | 0,0014 | 0,003 | 0,007 | 0,016 | 0,0005 | 0,0002 | - | 0,054 | 0,048 | 0,057 | 0,001 |
| V | FeCrAlCo | 250019 | 0,002 | 0,002 | 0,008 | 0,017 | 0,0006 | 0,0002 | - | 0,046 | 0,049 | 0,053 | 0,002 |
| V | FeCrAlCo | 250025 | 0,0013 | 0,002 | 0,004 | 0,015 | 0,0004 | 0,0002 | - | 0,033 | 0,048 | 0,050 | 0,004 |
| V | FeCrAlCo | 250035 | 0,002 | 0,003 | 0,005 | 0,017 | 0,0003 | 0,0002 | - | 0,043 | 0,047 | 0,055 | 0,001 |
| T: Legierungen nach dem Stand der Technik, V: nicht erfindungsgemäße Legierungen, E: erfindungsgemäße Legierungen | | | | | | | | | | | | | |

Tabelle 3. Mechanische Eigenschaften bei Raumtemperatur

| | Werkstoff | Charge | F1 in % | F3 in % | Si in % | Formel 2 in % | | Dicke in mm | Rp0,2 in MPA | Rm in MPA | A50 in % | Korn-größe in μm | Rekristallisation in % |
|---|---|---|---|---|---|---|---|---|---|---|---|---|---|
| | | | | | | 0,2*Nb | 0,07Nb | | | | | | |
| T | Crofer 22 H | 161061 | 29,8 | 15,1 | 0,21 | 0,102 | 0,357 | 1,53 | 385 | 541 | 27 | 42 | 100 |
| T | Crofer 22 H | 161061 | 29,8 | 15,1 | 0,21 | 0,102 | 0,357 | 0,31 | 363 | 5355 | 21 | 21 | 95 |
| T | Aluchrom W | 161138 | 29,8 | 15,1 | 0,21 | 0,002 | 0,007 | 1,51 | 450 | 554 | 20 | | |
| T | Aluchrom W | 161927 | 28,6 | 14,8 | 0,16 | 0,002 | 0,007 | 0,419 | 469 | 600 | 23,4 | 12 | 95 |
| T | Aluchrom W | 162118 | 29,3 | 15,0 | 0,22 | 0,002 | 0,007 | 0,395 | 461 | 571 | 26,5 | 19 | 100 |
| T | Aluchrom 418 YHF | 162210 | 31,6 | 18,5 | 0,17 | 0,002 | 0,007 | 1,50 | 422 | 543 | 21 | 15 | 80 |
| T | Aluchrom 418 YHF | 162211 | 32,1 | 18,6 | 0,15 | 0,002 | 0,007 | 0,228 | 492 | 580 | 23 | 12 | 95 |
| E | FeCrAlWNb | 2230 | 45,1 | 25,7 | 0,28 | 0,092 | 0,322 | 1,50 | 430 | 579 | 24 | 37 | 99 |
| E | FeCrAlWNb | 2230 | 45,1 | 25,7 | 0,28 | 0,092 | 0,322 | 0,30 | 444 | 603 | 25 | 20 | 100 |
| E | FeCrAlWNb | 250023 | 50,1 | 25,0 | 0,10 | 0,200 | 0,700 | 1,50 | 436 | 597 | 26 | 31 | 100 |
| E | FeCrAlMoNb | 250021 | 47,1 | 28,5 | 0,30 | 0,146 | 0,511 | 1,50 | 459 | 614 | 25 | 33 | 100 |
| E | FeCrAlMoNb | 250030 | 45,6 | 28,0 | 0,31 | 0,144 | 0,504 | 1,50 | 450 | 606 | 26 | 35 | 100 |
| E | FeCrAlWMoNb | 250026 | 51,7 | 28,4 | 0,31 | 0,134 | 0,469 | 1,50 | 458 | 621 | 25 | 49 | 100 |
| E | FeCrAlWMoNb | 250031 | 51,8 | 28,4 | 0,31 | 0,136 | 0,476 | 1,50 | 450 | 609 | 24 | 48 | 100 |
| V | FeCrAlCo | 250019 | 39,2 | 29,0 | 0,30 | 0,190 | 0,665 | 1,50 | 415 | 577 | 18 | 86 | 100 |
| V | FeCrAlCo | 250025 | 35,7 | 26,6 | 0,25 | 0,122 | 0,427 | 1,50 | 403 | 560 | 25 | 69 | 100 |
| V | FeCrAlCo | 250035 | 37,2 | 27,3 | 0,27 | 0,136 | 0,476 | 1,50 | 411 | 578 | 27 | 66 | 100 |

T: Legierungen nach dem Stand der Technik, V: nicht erfindungsgemäße Legierungen, E: erfindungsgemäße Legierungen
F1 = Berechnung des rechten Teils von Formel 1a bzw. 1b; F3 = Berechnung des rechten Teils von Formel 3a bzw. 3b

Tabelle 4. Zugversuche bei 900°C

| | Werkstoff | Charge | F1 in % | F3 in % | Si in % | Formel 2 in % | | Dicke in mm | V = $10^{-3}$ 1/s | | V = $10^{-5}$ 1/s | |
|---|---|---|---|---|---|---|---|---|---|---|---|---|
| | | | | | | 0,2*Nb | 0,07*Nb | | Rm in MPA | A50 in % | Rm in MPA | A50 in % |
| T | Crofer 22 H | 161061 | 29,8 | 15,1 | 0,21 | 0,102 | 0,357 | 1,53 | 33,8 - 35,8 | > 40 | 16,6 - 20,5 | > 30 |
| T | Crofer 22 H | 161995 | 38,6 | 29,7 | 0,24 | 0,102 | 0,357 | 0,31 | 36,5 | > 40 | 18,9 | > 30 |
| T | Aluchrom W | 161138 | 29,8 | 15,1 | 0,21 | 0,002 | 0,007 | 1,51 | 31,7 | > 40 | 8,3 | > 30 |
| T | Aluchrom W | 161927 | 28,6 | 14,8 | 0,16 | 0,002 | 0,007 | 0,419 | 25,9 | > 40 | 11,4 | > 30 |
| T | Aluchrom W | 162118 | 29,3 | 15,0 | 0,22 | 0,002 | 0,007 | 0,395 | | | | |
| T | Aluchrom 418 YHF | 162210 | 31,6 | 18,5 | 0,17 | 0,002 | 0,007 | 1,50 | 27,4 | > 40 | 8,3 | > 30 |
| T | Aluchrom 418 YHF | 162211 | 32,1 | 18,6 | 0,15 | 0,002 | 0,007 | 0,228 | 24,0 | > 40 | 12,7 | > 30 |
| E | FeCrAlWNb | 2230 | 45,1 | 25,7 | 0,28 | 0,092 | 0,322 | 1,50 | 40,0 | > 40 | 14,9-18,9 | > 30 |
| E | FeCrAlWNb | 250023 | 50,1 | 25,0 | 0,10 | 0,200 | 0,700 | 1,50 | 41,5 | > 40 | 15,7 | > 30 |
| E | FeCrAlMoNb | 250021 | 47,1 | 28,5 | 0,30 | 0,146 | 0,511 | 1,50 | | | | |
| E | FeCrAlMoNb | 250030 | 45,6 | 28,0 | 0,31 | 0,144 | 0,504 | 1,50 | 42,1 | > 40 | 17,9 | > 30 |
| E | FeCrAlWMoNb | 250026 | 51,7 | 28,4 | 0,31 | 0,134 | 0,469 | 1,50 | | | | |
| E | FeCrAlWMoNb | 250031 | 51,8 | 28,4 | 0,31 | 0,136 | 0,476 | 1,50 | 44,3 | > 40 | 17,1 | > 30 |
| V | FeCrAlCo | 250019 | 39,2 | 29,0 | 0,30 | 0,190 | 0,665 | 1,50 | | | | |
| V | FeCrAlCo | 250025 | 35,7 | 26,6 | 0,25 | 0,122 | 0,427 | 1,50 | | | | |
| V | FeCrAlCo | 250035 | 37,2 | 27,3 | 0,27 | 0,136 | 0,476 | 1,50 | 33,3 | > 40 | 16,2 | > 30 |
| T: Legierungen nach dem Stand der Technik, V: nicht erfindungsgemäße Legierungen, E: erfindungsgemäße Legierungen <br> F1 = Berechnung des rechten Teils von Formel 1a bzw. 1b; F3 = Berechnung des rechten Teils von Formel 3a bzw. 3b | | | | | | | | | | | | |

Tabelle 5. Warmstauchgrenze $R_{p0,2}$ bei 900°C

| | Werkstoff | Charge | F1 in % | F3 in % | Si in % | Formel 2 in % | | Zeit in h | V = $10^{-3}$ 1/s |
| | | | | | | 0,2*Nb | 0,07*Nb | | $R_{p0,2}$ in MPA |
|---|---|---|---|---|---|---|---|---|---|
| T | Crofer 22 H | 161061 | 38,9 | 29,5 | 0,21 | 0,102 | 0,357 | 1 | 46,3 |
| E | Fe19CrAlWNb | 250023 | 50,1 | 25,0 | 0,10 | 0,200 | 0,700 | 1 | 61,9 |
| E | Fe19CrAlMoNb | 250030 | 45,6 | 28,0 | 0,31 | 0,144 | 0,504 | 1 | 66 |
| E | Fe19CrAlWMoNb | 250031 | 51,8 | 28,4 | 0,31 | 0,136 | 0,476 | 1 | 63,7 |
| V | FeCrAlCo | 250035 | 37,2 | 27,3 | 0,27 | 0,136 | 0,476 | 1 | 48,5 |

T: Legierungen nach dem Stand der Technik, V: nicht erfindungsgemäße Legierungen, E: erfindungsgemäße Legierungen F1 = Berechnung des rechten Teils von Formel 1a bzw. 1b; F3 = Berechnung des rechten Teils von Formel 3a bzw. 3b

**Bezugszeichenliste**

Figur 1    Nettomassenänderung bei Oxidation an Laborluft bei 900°C mit einem Zyklus von 96 Stunden der Legierungen aus Tabelle 1 und 2. Jeder Messpunkt ist ein Mittelwert von 3 Proben.

Figur 2    Warmstauchversuche bei 900°C in Abhängigkeit der Auslagerungszeit an Legierungen aus Tabelle 1 und 2.

Figur 3    Fe-Cr-Phasen-Diagramm aus T.B. Massalski, "Binary Alloys Phase Diagramms" Band 1, ASM, (1987), Seite 228).

Figur 4    Temperatur - Zeit - Ausscheidungsdiagramme für Phasen mit einem Anteil größer 0,5% nach eine Glühung bei 1100°C für Fe - 18,5 % Cr - 3,3 % Al - 0,7 % Nb - 0,3 % Si - 0,15 % Mn - 0,002, % C - 0,007 % N (linkes Bild).

Figur 5    Temperatur - Zeit - Ausscheidungsdiagramme für Phasen mit einem Anteil größer 0,5% nach eine Glühung bei 1100°C für
Fe - 18,5 % Cr - 3,3 % Al - 2 % Mo - 0,7 % Nb - 0,3 % Si - 0,15 % Mn - 0,002 % C - 0,007 % N (linkes Bild)
Fe - 18,5 % Cr - 3,3 % Al - 2 % W - 0,7 % Nb - 0,3 % Si - 0,15 % Mn - 0,002 % C - 0,007 % N (rechtes Bild)

**Patentansprüche**

1. Eisen-Chrom-Aluminium-Legierung mit verbesserter Warmfestigkeit, geringer Chromverdampfungsrate und guter Verarbeitbarkeit mit (in Masse-%) 2,0 bis 4,5 % Al, 12 bis 25 % Cr, 1,0 bis 4 % W, 0,25 bis 2,0 % Nb, 0,05 bis 1,2 % Si, 0,001 bis 0,70 % Mn, 0,001 bis 0,030 % C, 0,0001 bis 0,05 % Mg, 0,0001 bis 0,03 % Ca, 0,001 bis 0,030 % P, max. 0,03 % N, max. 0,01 % S, zusätzlich enthaltend Yttrium 0,01 bis 0,10 %, insbesondere 0,03 - 0,09 %, Hafnium 0,01 bis 0,10 %, insbesondere 0,02 - 0,08 %; Zirkon 0,01 bis 0,10 %, insbesondere 0,02 - 0,08 %, wobei W durch 1 bis 4 % Mo werden kann, wobei Y ganz oder teilweise durch 0,01 bis 0,10 % mindestens eines der Elemente Sc und/oder La und/oder Cer ersetzt werden kann und wobei Hf oder Zr ganz oder teilweise durch 0,01 bis 0,1 % des Elementes Ti ersetzt werden kann, bedarfsweise des Weiteren enthaltend max. 1,0 % Nickel, max, 1,0 % Co, max. 0,5 % Kupfer, max. 0,1 % Vanadium, 0,001 bis 0,010 % Sauerstoff und/oder 0,0001 - 0,008 % Bor, Rest Eisen und den üblichen erschmelzungsbedingten Verunreinigungen, wie insbesondere Pb mit max. 0,002 %, Zr mit max. 0,002 % und Sn mit max. 0,002 %, wobei die Legierung folgende Formeln erfüllt:

36 % < Cr + 3*(Al+ Si) + 4,6*Mo + 5,2*W + 10*Nb, wobei Cr, Al, Si, Mo, W und Nb der Legierungsgehalt dieser Elemente Masse-% ist (Formel 1 a).
$0,2 * Nb \leq Si \leq 0,7* Nb$, wobei Si und Nb der Legierungsgehalt dieser Elemente in Masse-% ist (Formel 2).
19 % < Cr +4*Nb + 21,6* Min(Si ; 0,5*Nb), wobei Cr, Si und Nb der Legierungsgehalt dieser Elemente in Masse-% ist und Min(Si ; 0,5* Nb) der kleinere Wert von Si und 0,5* Nb ist (Formel 3a).

**2.** Legierung nach Anspruch 1, mit einem Aluminiumgehalt (in Masse-%) von 2,5 bis 4,5 %.

**3.** Legierung nach Anspruch 1 oder 2, mit einem Aluminiumgehalt (in Masse-%) von 3,0 bis 4,5 %, insbesondere 3,0 - 4,0 %.

**4.** Legierung nach einem der Ansprüche 1 bis 3, mit einem Chromgehalt (in Masse-%) von 14 bis 23 %, insbesondere 16 - 23 %.

**5.** Legierung nach einem der Ansprüche 1 bis 4, mit einem Siliziumgehalt (in Masse-%) von 0,05 bis 1,0 %.

**6.** Legierung nach einem der Ansprüche 1 bis 5, mit einem Kohlenstoffgehalt (in Masse-%) von 0,002 bis 0,020 %, insbesondere 0,002 - 0,015 %.

**7.** Legierung nach einem der Ansprüche 1 bis 6, mit einem Wolframgehalt (in Masse-%) von 1,5 bis 3 %

**8.** Legierung nach einem der Ansprüche 1 bis 7, mit (in Masse-%) 0,0001 bis 0,03 % Mg und 0,0001 bis 0,02 % Ca.

**9.** Legierung nach einem der Ansprüche 1 bis 8, mit (in Masse-%) 0,010 bis 0,025 % P.

**10.** Verwendung der Legierung nach einem der Ansprüche 1 bis 9 als Band, insbesondere im Dickenbereich von 0,02 mm bis 3 mm.

**11.** Verwendung der Legierung nach einem der Ansprüche 1 bis 9 als Draht, insbesondere im Durchmesserbereich von 0,01 bis 12 mm.

**12.** Verwendung der Legierung nach einem der Ansprüche 1 bis 11 für den Einsatz in einer Festoxid-Brennstoffzelle, insbesondere als nicht leitfähiger Teil einer Interkonnektorplatte und/oder als Bauteil in Zusatzaggregaten einer Festoxid-Brennstoffzelle, wie insbesondere in einem Wärmetauscher.

**13.** Verwendung der Legierung nach einem der Ansprüche 1 bis 11, als Trägerfolie und/oder Drahtgeflecht in metallischen Abgaskatalysatoren.

**14.** Verwendung der Legierung nach einem der Ansprüche 1 bis 11 als Heizelement.

**Claims**

**1.** An iron-chromium-aluminum alloy having an elevated high-temperature strength, a low chromium vaporization rate and a good workability, comprising (in % by mass) 2.0 to 4.5 % Al, 12 to 25 % Cr, 1.0 to 4 % W, 0.25 to 2.0 % Nb, 0.05 to 1.2 % Si, 0.001 to 0.70 % Mn, 0.001 to 0.030 % C, 0.0001 to 0.05 % Mg, 0.0001 to 0.03 % Ca, 0.001 to 0.030 % P, max. 0.03 % N, max. 0.01 % S, additionally containing 0.01 to 0.10 %, especially 0.03 - 0.09 % yttrium, 0.01 to 0.10 %, especially 0.02 - 0.08 % hafnium, 0.01 to 0.10 %, especially 0.02-0.08 % zirconium, wherein W can be replaced by 1 to 4 % Mo, wherein Y can be completely or partially replaced by 0.01 to 0.10 % of at least one of the elements Sc and/or La and/or cerium, and wherein Hf or Zr can be completely or partially replaced by 0.01 to 0.1 % of the element Ti, furthermore, if needed, containing max. 1.0 % nickel, max. 1.0 % Co, max. 0.5 % copper, max. 0.1 % vanadium, 0.001 to 0.010 % oxygen and/or 0.0001 - 0.008 % boron, the rest being iron and the usual melting dependent impurities, such as in particular max. 0.002 % Pb, max. 0.002 % Zr and max. 0.002 % Sn, wherein the alloy satisfies the following formulas:

36 % < Cr + 3*(Al + Si) + 4.6*Mo + 5.2*W + 10*Nb, wherein Cr, Al, Si, Mo, W and Nb are the alloy content of these elements in % by mass (formula 1 a).
0.2* Nb ≤ Si ≤ 0.7* Nb, wherein Si and Nb are the alloy content of these elements in % by mass (formula 2).
19 % < Cr +4*Nb + 21.6*Min(Si ; 0.5 *Nb), wherein Cr, Si and Nb are the alloy content of these elements in % by mass and Min(Si ; 0.5*Nb) is the smaller value of Si and 0.5*Nb (formula 3a).

**2.** An alloy according to claim 1, comprising an aluminum content (in % by mass) comprised between 2.5 and 4.5 %.

**3.** An alloy according to claim 1 or 2, comprising an aluminum content (in % by mass) comprised between 3.0 and 4.5 %, in particular between 3.0 and 4.0 %.

4. An alloy according to one of the claims 1 through 3, comprising a chromium content (in % by mass) comprised between 14 and 23 %, in particular between 16 and 23 %.

5. An alloy according to one of the claims 1 through 4, comprising a silicium content (in % by mass) comprised between 0.05 and 1.0 %.

6. An alloy according to one of the claims 1 through 5, comprising a carbon content (in % by mass) comprised between 0.002 and 0.020 %, in particular between 0.002 and 0.015 %.

7. An alloy according to one of the claims 1 through 6, comprising a tungsten content (in % by mass) comprised between 1.5 and 3 %.

8. An alloy according to one of the claims 1 through 7, comprising (in % by mass) 0.0001 to 0.03 % Mg and 0.0001 to 0.02 % Ca.

9. An alloy according to one of the claims 1 through 8, comprising (in % by mass) 0.010 to 0.025 % P.

10. A use of the alloy according to one of the claims 1 through 9 as band, in particular in the thickness range comprised between 0.02 mm and 3 mm.

11. A use of the alloy according to one of the claims 1 through 9 as wire, in particular in the diameter range comprised between 0.01 and 12 mm.

12. A use of the alloy according to one of the claims 1 through 11 in a solid oxide fuel cell, in particular as non-conductive part of an interconnector plate and/or as structural part in additional aggregates of a solid oxide fuel cell, such as in particular in a heat exchanger.

13. A use of the alloy according to one of the claims 1 through 11 as carrier foil and/or mesh wire in metallic exhaust catalysts.

14. A use of the alloy according to one of the claims 1 through 11 as heating element.

## Revendications

1. Alliage fer-chrome-aluminium ayant une résistance à la chaleur accrue, un faible taux d'évaporation de chrome et une bonne aptitude au façonnage, comprenant (en % en masse) 2,0 à 4,5 % de Al, 12 à 25 % de Cr, 1,0 à 4 % de W, 0,25 à 2,0 % de Nb, 0,05 à 1,2 % de Si, 0,001 à 0,70 % de Mn, 0,001 à 0,030 % de C, 0,0001 à 0,05 % de Mg, 0,0001 à 0,03 % de Ca, 0,001 à 0,030 % de P, max. 0,03 % de N, max. 0,01 % de S, contenant supplémentairement 0,01 à 0,10 %, notamment 0,03 '0,09 % d'yttrium, 0,01 à 0,10 %, notamment 0,02 à 0,08 % de hafnium, 0,01 à 0,10, notamment 0,02 à 0,08 % de zirconium, W pouvant être remplacé par 1 à 4 % de Mo, Y pouvant complètement ou partiellement être remplacé par 0,01 à 0,10 % d'au moins un des éléments Sc et/ou La et/ou cérium et Hf ou Zr pouvant complètement ou partiellement être remplacé par 0,01 à 0,1 % de l'élément Ti, en cas de besoin, contenant de plus max. 1,0 % de nickel, max. 1,0 % de Co, max. 0,5 % de cuivre, max. 0,1 % de vanadium, 0,001 à 0,010 % d'oxygène et/ou 0,0001 à 0,008 % de bore, le reste étant du fer et les impuretés usuelles résultant de l'élaboration, telles que notamment max. 0,002 % de Pb, max. 0,002 % de Zr et max. 0,002 % de Sn, l'alliage satisfaisant aux formules suivantes :

36 % < Cr + 3*(Al + Si) + 4,6*Mo + 5,2*W + 10*Nb, Cr, Al, Si, Mo, W et Nb étant la teneur en alliage de ces éléments en % en masse (formule 1 a),
0,2 * Nb $\leq$ Si $\leq$ 0,7* Nb, Si et Nb étant la teneur en alliage de ces éléments en % en masse (formule 2),
19 % < Cr + 4*Nb + 21,6*Min(Si ; 0,5*Nb), Cr, Si et Nb étant la teneur en alliage de ces éléments en % en masse et Min(Si ; 0,5*Nb) étant la valeur la plus faible de Si et 0,5*Nb (formule 3a).

2. Alliage selon la revendication 1, comprenant une teneur en aluminium (en % en masse) comprise entre 2,5 et 4,5 %.

**3.** Alliage selon la revendication 1 ou la revendication 2, comprenant une teneur en aluminium (en % en masse) comprise entre 3,0 et 4,5 %, notamment entre 3,0 et 4,0 %.

**4.** Alliage selon l'une des revendications 1 à 3, comprenant une teneur en chrome (en % en masse) comprise entre 14 et 23 %, notamment entre 16 et 23 %.

**5.** Alliage selon l'une des revendications 1 à 4, comprenant une teneur en silicium (en % en masse) comprise entre 0,05 et 1,0 %.

**6.** Alliage selon l'une des revendications 1 à 5, comprenant une teneur en carbone (en % en masse) comprise entre 0,002 et 0,020 %, notamment entre 0,002 et 0,015 %.

**7.** Alliage selon l'une des revendications 1 à 6, comprenant une teneur en tungstène (en % en masse) comprise entre 1,5 et 3 %.

**8.** Alliage selon l'une des revendications 1 à 7, comprenant (en % en masse) 0,0001 à 0,003 % de Mg et 0,0001 à 0,02 % de Ca.

**9.** Alliage selon l'une des revendications 1 à 8, comprenant (en % en masse) 0,010 à 0,025 % de P.

**10.** Utilisation de l'alliage selon l'une des revendications 1 à 9 comme bande, notamment dans la plage d'épaisseurs comprise entre 0,02 mm et 3 mm.

**11.** Utilisation de l'alliage selon l'une des revendications 1 à 9 comme fil de fer, notamment dans la plage de diamètres comprise entre 0,01et 12 mm.

**12.** Utilisation de l'alliage selon l'une des revendications 1 à 11 dans une pile à combustible à oxyde solide, notamment comme partie non conductrice d'une plaque d'interconnexion et/ou comme élément de construction dans des agrégats supplémentaires d'une pile à combustible à oxyde solide, tels que notamment dans un échangeur thermique.

**13.** Utilisation de l'alliage selon l'une des revendications 1 à 11 comme film support et/ou treillis de fils métalliques dans des catalyseurs de gaz d'échappement.

**14.** Utilisation de l'alliage selon l'une des revendications 1 à 11 comme élément de chauffage.

Netto-Massenänderung in Luft bei 900°C, 96 h Zyklus, Ofenabkühlung

Spez. Massenänderung in g/m²

Zeit in h

Hattendorf

Materialname; Probendicke, Charge

- Crofer 22 H; 1,51 mm, 161061/5803
- Aluchrom 4 18 YHf; 0,23 mm, 162211/58001
- Aluchrom 4 18 Yhf; 1,49 mm, 162210/9802
- Aluchrom W; 0,40 mm, 161927/12804
- Aluchrom W; 1,48 mm, 161138/5806
- FeCrAlWNb; 1,55 mm, LB 2230
- FeCrAlWNb; 1,50 mm, LB 250023
- FeCrAlMoNb; 1,50 mm, LB 250021
- FeCrAlMoNb; 1,50 mm, LB 250030
- FeCrAlWMoNb; 1,50 mm, LB 250026
- FeCrAlMoNb; 1,50 mm, LB 250031
- FeCrAlCo; 1,50 mm, LB 250019
- FeCrAlCo; 1,46 mm, LB 250025
- FeCrAlCo; 1,45 mm, LB 250035

Fig. 1

Fig. 2

Fig. 3

Vom Benutzer gesetzte Starttemperatur : 1100.0 C !

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10025108 A1
- EP 1298228 A1
- DE 102006007598 A1
- EP 1536031 A1
- EP 1882756 A1
- EP 1298228 A2
- DE 10310865 B3
- DE 10157749 A1

- JP 6116686 A
- JP 62278248 A
- US 5228932 A
- EP 0516097 A1
- EP 0290719 A1
- EP 0516267 A1
- WO 2009124530 A1
- DE 19928842 A1

**In der Beschreibung aufgeführte Nicht-Patentliteratur**

- **QUADAKKERS W.J. ; PIRON-ABELLAN J. ; SHEMET V. ; SINGHEISER L.** Metallic Interconnects for Solid Oxide Fuel Cells - a Review. *Materials at High Temperatures,* 2003, vol. 20 (2), 115-127
- **F.H.STOTT ; G.J.GABRIEL ; F.I.WEI ; G.C. WOOD.** The development of silicon-containig oxides during the oxidation of Iron-chomium-base alloy. *Werkstoffe und Korrosion,* 1987, vol. 38, 521-531
- **BRUMM MW ; GRABKE HJ.** *Corrosion Science,* 1992, vol. 33 (11), 1677 ff
- **PRAGNELL W.M. ; EVANS H.E. ; NAUMENKO D. ; QUADAKKERS W.J.** Aluminium depletion in FeCrAl-Y Steel During Transitional Alumina Formation, Microscopy of Oxidation. *Materials at High Temperatures,* 2005, vol. 22, 399-404
- **RALF BÜRGEL.** Handbuch der Hochtemperaturwerkstofftechnik. Vieweg Verlag, 2006, 349-350
- **J. KLÖWER.** *Materials and Corrosion,* 2000, vol. 51, 373-385

- **J. FROITZHEIM ; G.H. MEIER ; L. NIEWOLAK ; P.J. ENNIS ; H. HATTENDORF ; L. SINGHEISER ; W.J. QUADAKKERS.** Development of high strength ferritic steel for interconnect application in SOFCs. *Journal of Power Sources,* 2008, vol. 178, 163-173
- **K. YAMAMOTO ; Y. KIMURA ; F.-G. WEI ; Y. MISHIMA.** Design of Laves phase strengthened ferritic heat resisting steels in the Fe-Cr-Nb(-Ni) system. *Materials Science & Engineering. A 329 -331, Structural materials,* 2002, 249-254
- **N. FUJITA ; K. OHMURA ; M. KIKUCHI ; T. SUZUKI ; S. FUNAKI ; I. HIROSHIGE.** Effect of Nb on high-temperature properties for ferritic stainless steel. *Scripta Materialia,* 1996, vol. 35 (6), 705-710
- **Y. HOSOI ; N. WADE ; S. KUNIMITSU ; T. URITA.** Effect of Si and Mn on the precipitation behavior of Laves phase and toughness of 9Cr-2Mo steel. *Transaction of the Iron and Steel Institute of Japan,* 1986, 26
- **T.B. MASSALSKI.** Binary Alloys Phase Diagramms. ASM, 1987, vol. 1, 228